# FASCICULE DE BREVET EUROPEEN

(11) **EP 0 981 797 B1**
(45) Date de publication et mention de la délivrance du brevet: **16.10.2002**
(21) Numéro de dépôt: 98924411.6
(22) Date de dépôt: 11.05.1998
(51) Int. Cl.: G06K 7/00

(54) **CONNECTEUR ELECTRIQUE POUR LE RACCORDEMENT SIMULTANE DE PLUSIEURS CARTES A CIRCUIT(S) INTEGRES(S) A CONTACT**
ELEKTRISCHER VERBINDER FÜR DEN GLEICHZEITIGEN ANSCHLUSS MEHRERER CHIPKARTEN MIT KONTAKTEN
ELECTRIC CONNECTOR FOR SIMULTANEOUS CONNECTION OF SEVERAL CONTACT CARDS WITH INTEGRATED CIRCUITS

(30) Priorité: 13.05.1997 FR 9705809
(43) Date de publication de la demande: 01.03.2000
(73) Titulaire: ITT MANUFACTURING ENTERPRISES, INC., Wilmington, Delaware 19801 (US)
(72) Inventeur: BRICAUD, Hervé, F-39100 Dole (FR); VALCHER, Fabrice, F-39500 Damparis (FR)
(74) Mandataire: Kohn, Philippe
(86) Numéro de dépôt international: FR9800933
(87) Numéro de publication internationale: WO98052138

(56) Documents cités:
- EP-A- 0 385 022
- EP-A- 0 633 633
- EP-A- 0 656 597
- DE-U- 29 518 707

## Description

La présente invention concerne un connecteur électrique pour le raccordement simultané d'au moins deux cartes à circuits(s) intégré(s) à contact.

Ce type de carte à circuit(s) intégré(s), aussi appelée carte à puce, est utilisé dans de nombreuses applications.

C'est notamment le cas pour autoriser le détenteur d'une carte spécifique à effectuer des transactions par échange de données, par exemple avec un réseau bancaire.

Ce principe trouve de nombreuses applications en vue de faciliter les transactions commerciales et les commerçants faisant appel à ce principe doivent disposer d'autant de cartes que de réseaux bancaires ou de paiement avec lesquels ils ont passé des accords préalables.

Le raccordement autorisé à chaque réseau nécessite donc de disposer d'un appareil de lecture-écriture comportant un connecteur électrique pour le raccordement des circuits de traitement de la carte à puce autorisant l'accès au réseau déterminé.

Dans le but d'une plus grande intégration, il a été proposé de faire appel à un terminal unique de traitement et d'échange de données avec différents réseaux bancaires dans lequel le commerçant qui veut pouvoir traiter simultanément avec plusieurs réseaux bancaires en fonction de ceux auxquels adhère sa clientèle, introduit ses cartes qui l'identifient et l'autorisent à échanger avec ces réseaux.

Ce terminal susceptible de recevoir simultanément plusieurs cartes doit donc en principe disposer d'autant de connecteurs électriques de raccordement que de cartes susceptibles d'être utilisées simultanément.

Le document EP-A-0.633.633 décrit une structure unitaire de connecteur ne pouvant recevoir qu'une seule carte, et dont l'utilisation en vue du raccordement de plusieurs cartes nécessite la multiplication pure et simple du nombre de connecteurs unitaires.

Les documents EP-A-0.385.022 ou DE-U-295.18.707 proposent chacun une conception d'un connecteur pouvant recevoir et raccorder simultanément plusieurs cartes, mais les conceptions proposées sont complexes, font appel à un grand nombre de composants et sont difficiles à mettre en oeuvre industriellement. De plus, elles induisent des manipulations complexes pour l'utilisateur.

Dans le but d'une plus grande intégration, d'une économie de composants et d'une simplification des opérations de montage et de raccordement des connecteurs, ainsi que pour simplifier la mise en place des cartes dans le terminal, l'invention propose un connecteur électrique pour le raccordement électrique simultané d'au moins deux cartes à circuit(s) intégré(s) à contact dont les faces inférieures comportent des plages de raccordement, caractérisé en ce qu'il comporte ;
- au moins deux socles inférieurs indépendants et identiques en forme de plaque en matériau isolant, qui sont adjacents transversalement, dont chacun forme support pour une série d'éléments de contact électrique dont des extrémités libres d contact font saillie au delà du plan de la face supérieure du socle correspondant pour coopérer avec les plages de raccordement d'une des cartes, et dont chacun est fixé sur une plaque inférieure commune, notamment une plaque à circuit imprimé, sur laquelle il prend appui par sa face inférieure ;
- un couvercle supérieur porte-cartes unique
   qui comporte au moins deux logements indépendants, coplanaires, adjacents transversalement et dont chacun peut recevoir, au moins partiellement, une carte introduite longitudinalement dans son logement, d'avant en arrière, selon une direction parallèle à son plan général et à celui du couvercle,
   et qui est monté pivotant par rapport aux socles, autour d'un axe transversal d'articulation situé au voisinage des extrémités longitudinales arrière des socles et du couvercle, entre une position fermée de contact dans laquelle les plages de raccordement de chaque carte en place dans son logement coopèrent avec les extrémités de contact du socle correspondant, et une position ouverte permettant la mise en place ou l'extraction d'une ou plusieurs cartes ;
- et un organe de verrouillage du couvercle en position fermée.

Selon d'autres caractéristiques de l'invention :
- il comporte un châssis en forme de cadre rectangulaire qui entoure les socles adjacents, qui est fixé sur la plaque inférieure, et sur lequel le couvercle est monté pivotant ;
- le châssis-cadre est fixé sur la plaque inférieure et sur les socles par l'intermédiaire de moyens de montage du type à baïonnette ;
- le châssis-cadre comporte des ergots de fixation qui s'étendent dans le plan général du châssis-cadre, qui sont adjacents à la face supérieure de la plaque inférieure et qui sont susceptibles d'être introduits, par coulissement longitudinal d'arrière en avant, sous des pattes de retenue verticale du châssis-cadre qui s'étendent transversalement dans un plan horizontal à partir des bords parallèles longitudinaux et opposés des socles ;
- chaque socle comporte quatre pattes de retenue agencées par paires le long de ses deux bords longitudinaux parallèles et au voisinage des extrémités longitudinales avant et arrière de ces bords ;
- le châssis-cadre comporte des moyens d'indexation de sa position longitudinale par rapport à la plaque inférieure commune aux différents socles ;
- le châssis-cadre comporte deux montants latéraux parallèles et opposés qui sont reliés, au voisinage de leurs extrémités longitudinales par deux traverses avant et arrière, et l'épaisseur verticale du châssis-cadre est supérieure à la hauteur des socles et du couvercle en position fermée ;
- lesdits moyens d'indexation comportent une paire de pions verticaux d'indexation dont chacun est porté par une portion déformable élastiquement de l'un des montants latéraux du châssis-cadre à partir de laquelle il s'étend verticalement au delà du plan de la face inférieure du châssis-cadre pour être reçu dans un trou complémentaire de la plaque inférieure ;
- le châssis-cadre comporte des moyens d'indexation de sa position longitudinale par rapport aux socles ;
- l'organe de verrouillage intervient entre le couvercle et le châssis-cadre ;
- l'organe de verrouillage est monté coulissant longitudinalement d'avant en arrière sur le couvercle entre une position avant verrouillée dans laquelle des moyens de verrouillage de l'organe de verrouillage coopèrent avec des moyens complémentaires formé dans le châssis-cadre, et une position arrière déverrouillée ;
- les moyens de verrouillage comportent une série de pattes de verrouillage qui s'étendent longitudinalement à partir d'un bord transversal avant de l'organe de verrouillage et dont chacune est reçue sous une butée de verrouillage qui s'étend longitudinalement vers l'arrière depuis la traverse avant du châssis-cadre ;
- chaque logement de carte est ouvert partiellement dans la face supérieure du couvercle, et en ce que le fond du logement, contre lequel la carte prend appui par sa face inférieure, est évidé au moins partiellement de manière à dégager la partie de la face inférieure de la carte (C) en regard des plages de raccordement ;
- une plate-forme de pose de la carte (C) en forme de barreau est agencée au voisinage de l'extrémité avant de chaque logement et sa face supérieure définit un plan (P) de pose de la carte (C) correspondante ;
- l'organe de verrouillage est une plaque transversale qui est montée coulissante au dessus de la face supérieure du couvercle, et en ce que ses extrémités transversales opposées sont repliées verticalement le long de faces transversales externes de montants latéraux du couvercle, puis transversalement vers l'intérieur sous la forme de deux pattes de manière à délimiter deux couloirs de guidage de la plaque de verrouillage sur le couvercle ;
- des moyens d'articulation du couvercle sur le châssis-cadre sont constitués par des tronçons d'axe d'articulation portés par la traverse arrière du châssis cadre, et par autant de logements cylindriques complémentaires dont chacun est formé à l'extrémité arrière du couvercle ;
- les logements cylindriques sont ouverts radialement selon une direction sensiblement perpendiculaire à la face supérieure du couvercle pour permettre le montage des tronçons d'axe dans les logements par emboîtement élastique selon ladite direction radiale;
- il comporte des moyens élastiques qui sollicitent en permanence le couvercle, par rapport au châssis-cadre, vers sa position ouverte ;
- chaque socle comporte un commutateur électrique de détection de la présence d'une carte en position de lecture/écriture

D'autres caractéristiques et avantages de l'invention apparaîtront à la lecture de la description détaillée qui va suivre pour la compréhension de laquelle on se reportera aux dessins annexés dans lesquels :
- la figure 1 est une vue en perspective d'une plaque à circuit imprimé destinée à recevoir un connecteur électrique conforme aux enseignements de l'invention pour le raccordement simultané d'au maximum quatre cartes ;
- la figure 2 est une vue similaire à celle de la figure 1 sur laquelle la plaque à circuit imprimé est illustrée avec les quatre socles porte-contacts ;
- la figure 3 est une vue en perspective similaire à celle de la figure 1 et 2 sur laquelle un connecteur complet conforme aux enseignements de l'invention est illustré en position montée avec son couvercle fermé et verrouillé qui porte trois cartes ;
- la figure 4 est une vue en perspective de dessus de l'un des socles du connecteur selon l'invention ;
- la figure 5 est une vue en perspective de dessous du socle de la figure 4 ;
- la figure 6 est une vue en perspective de dessus du châssis-cadre du connecteur selon l'invention ;
- la figure 7A est une vue à plus grande échelle du détail A de la figure 6 ;
- la figure 7B est une vue à plus grande échelle du détail B de la figure 6 ;
- la figure 8 est une vue en perspective de dessous du châssis-cadre ;
- les figures 9A et 9B sont des vues à plus grande échelle des détails A et B de la figure 8 ;
- la figure 10 est une vue en perspective de dessus du couvercle du connecteur ;
- la figure 11 est une vue en perspective de dessous du couvercle ;
- la figure 12 est une vue à plus grande échelle du détail A de la figure 11 ;
- la figure 13 est une vue en perspective de dessus qui illustre le couvercle monté sur le châssis-cadre et qui est représenté dans sa position d'ouverture maximale ;
- la figure 14 est une vue en perspective de dessous de la figure 13 ;
- la figure 15 est une vue en perspective de dessus de l'organe de verrouillage du couvercle du connecteur ;
- la figure 15A est une vue de détail en section selon la ligne A-A de la figure 15 ;
- la figure 16 est une vue en perspective de dessous de l'organe de verrouillage de la figure 15 ;
- la figure 17 est une vue à plus grande échelle du détail A de la figure 16 ;
- la figure 18 est une vue en perspective de dessus qui illustre le châssis-cadre avec le couvercle qui porte l'organe de verrouillage en position fermée et verrouillée du couvercle ;
- la figure 19A est une vue à plus grande échelle du détail A de la figure 18 ;
- la figure 19B est une vue similaire à celle de la figure 19A qui illustre le même détail lorsque l'organe de verrouillage est dans sa position déverrouillée ;
- la figure 20 est une vue en perspective de dessous de la figure 18 ;
- la figure 21 est une vue en perspective qui illustre une première étape du montage et de la fixation du type à baïonnette de l'ensemble illustré à la figure 13 sur l'ensemble illustré à la figure 2 ;
- la figure 22 est une vue à plus grande échelle du détail A de la figure 21 ;
- les figures 23 et 24 sont des vues similaires à celles des figures 21 et 22 correspondant à la deuxième étape du montage et de la fixation du type à baïonnette ;
- la figure 25 est une vue en perspective de dessus qui illustre le connecteur en position monté et fixé, qui est représenté avec son couvercle en position d'ouverture maximale et sur laquelle deux cartes sont représentées en position introduite ainsi qu'une troisième en cours d'introduction ;
- la figure 26 est une vue de dessus du connecteur de la figure 25 avec son couvercle en position fermée et déverrouillée ;
- la figure 27 est un vue similaire à celle de la figure 26 sur laquelle le couvercle est illustré en position fermée et verrouillée, sans la plaque inférieure à circuit imprimé ;
- la figure 28 est une vue de dessous du connecteur de la figure 27 ; et
- les figures 29 et 30 sont des vues similaires à celles des figures 6 et 8 qui illustrent une variante de réalisation du châssis-cadre du connecteur.

Dans la description qui va suivre, ainsi que dans les revendications, les termes "supérieur", "inférieur", "horizontal", "vertical", "avant" et "arrière" sont utilisés en référence aux figures pour simplifier la description et sa compréhension, sans qu'ils constituent une quelconque limitation de l'invention.

Dans la description, des composants similaires, analogues, ou identiques sont désignés par les mêmes chiffres de référence.

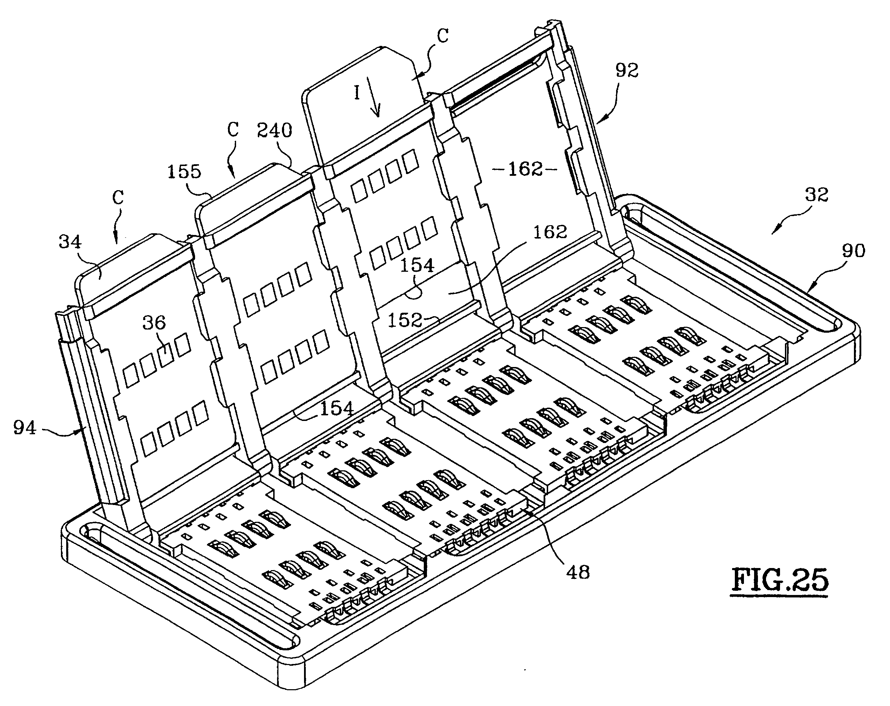

On a représenté sur les figures un connecteur électrique 32 pour le raccordement électrique d'au maximum quatre cartes C dont chacune est une carte à circuit(s) intégré(s) à contact qui comporte sur sa face inférieure 34 (voir figure 25) des plages parallèles de raccordement électrique 36 orientées longitudinalement, c'est-à-dire parallèlement à la direction I d'introduction de chaque carte C dans le connecteur 32

Le connecteur 32 est prévu pour être intégré à un dispositif ou terminal (non représenté sur les figures) qui comporte une plaque inférieure 38 qui est par exemple une plaque à circuit imprimé sur laquelle est fixé le connecteur 32.

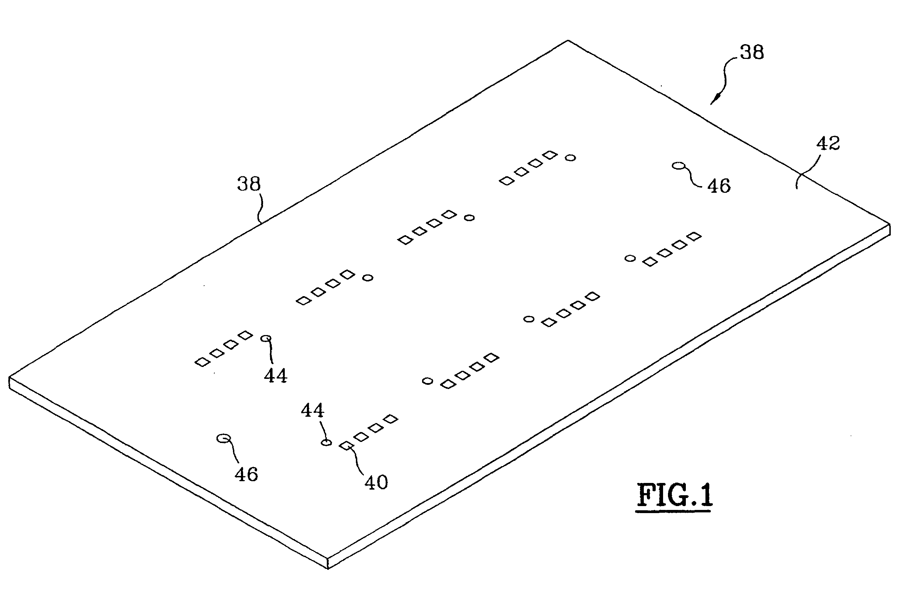

Dans la représentation simplifiée de la plaque 38 à la figure 1, on voit que cette dernière comporte, adjacents transversalement, quatre groupes identiques de huit pistes conductrices 40 agencées sur la face supérieure 42 de la plaque 38, chaque groupe de pistes 40 étant associé à une paire de trous de positionnement 44.

De part et d'autre des quatre groupes, la plaque 42 comporte aussi deux trous 46 opposés transversalement.

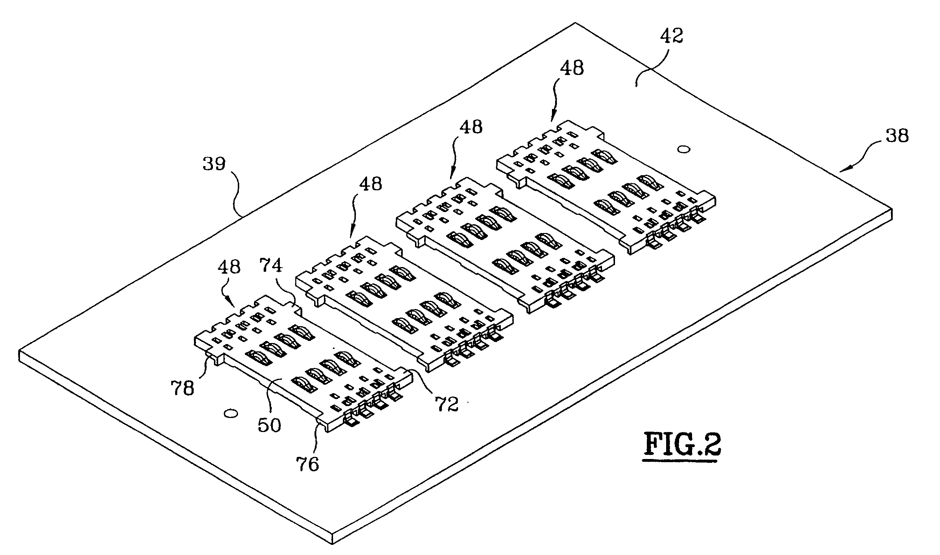

Comme on peut le voir à la figure 2, la plaque 38 est ainsi prévue pour recevoir, sur sa face supérieure 42, quatre socles inférieurs indépendants et identiques 48.

Chaque socle 48 est un socle porte-contacts qui est constitué pour l'essentiel par un corps 50 en matière plastique isolante en forme générale de plaque qui sert de support à une série de lames 52 de contact électrique en matériau conducteur.

Chaque lame 52 est d'orientation longitudinale et elle est insérée dans le socle 50.

Chaque lame 52 comporte une extrémité libre de contact bombée 54 qui fait saillie verticalement au-dessus de la face supérieure horizontale plane 56 du socle 48 pour permettre sa venue en contact avec une plage correspondante 36 d'une carte C lorsque cette dernière est en position de raccordement.

Chaque lame 52 comporte une autre extrémité libre 58, dite de raccordement, qui s'étend longitudinalement au-delà du bord transversal avant 60 ou arrière 62 du socle 48, pour permettre le raccordement, par soudage ou brasage, de cette extrémité 58 avec une piste conductrice correspondante 40 de la plaque 42 sur la face supérieure 42 de laquelle le socle 48 repose par sa face inférieure horizontale 64.

Dans l'exemple illustré sur les figures, cette face inférieure 64 comporte, au voisinage de deux de ses extrémités diagonalement opposées, deux pions cylindriques 66 de positionnement du socle 48 sur la plaque 42 qui font saillie verticalement vers le bas à partir de la face inférieure et dont chacun est prévu pour être reçu dans un trou 44 de la plaque 42.

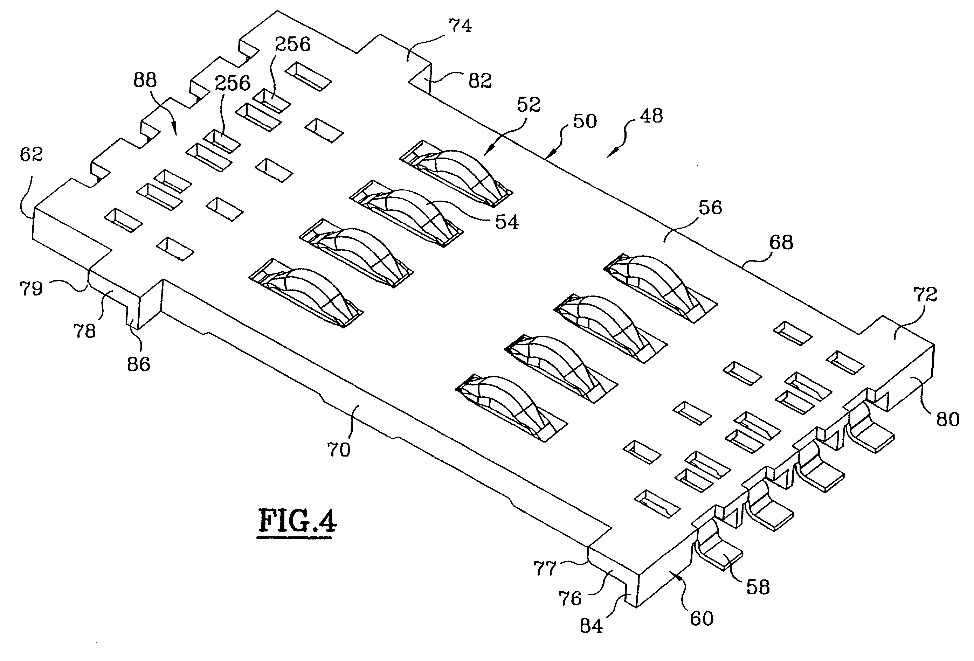

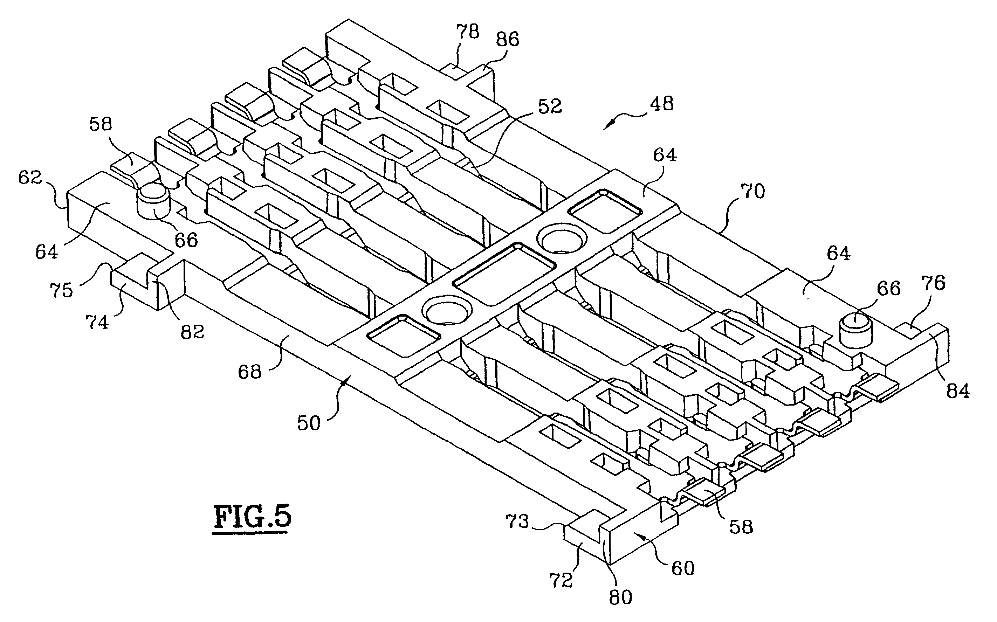

Comme on peut le voir notamment sur les figures 4 et 5 le corps 50 de chaque socle porte-contacts 48 est délimité transversalement par deux bords longitudinaux parallèles, d'orientation verticale, 68 et 70.

Au voisinage des bords transversaux avant 60 et arrière 62, chaque bord longitudinal 68, 70 comporte deux pattes horizontales 72, 74 et 76, 78 qui s'étendent transversalement vers l'extérieur et dont chacune est sensiblement coplanaire avec la face supérieure 56 du socle 48.

Chacune des pattes 72 à 78 s'étend ainsi au-dessus et à distance de la face supérieure 42 de la plaque 38 avec laquelle elle délimite un logement vertical ouvert longitudinalement vers l'arrière, c'est-à-dire vers le bord transversal arrière 39 de la plaque 38.

Afin de renforcer la tenue mécanique des pattes 72 à 78, chacune d'elle est renforcée par une plaque verticale de renfort 84 à 86 qui prennent appui par leur bord inférieur sur la face supérieure 42 de la plaque 38 et qui ferment longitudinalement vers l'avant les logements délimités verticalement par les pattes 72 à 78.

Comme on peut le voir notamment sur la figure 4, hormis les extrémités de contact 54 des lames 52, la face supérieure 56 du socle porte-contacts 48 est entièrement plane et dégagée, la partie d'extrémité arrière du corps 50, qui s'étend longitudinalement vers l'arrière au-delà des pattes 74 et 78 se présentant globalement comme une partie de plaque de section rectangulaire 88.

Les quatre socles porte-contacts 48 sont identiques et, après avoir fabriqué ces socles indépendamment l'un de l'autre, leur montage et fixation sur la plaque 38 est particulièrement aisé en faisant notamment appel à la technique du "pick and place".

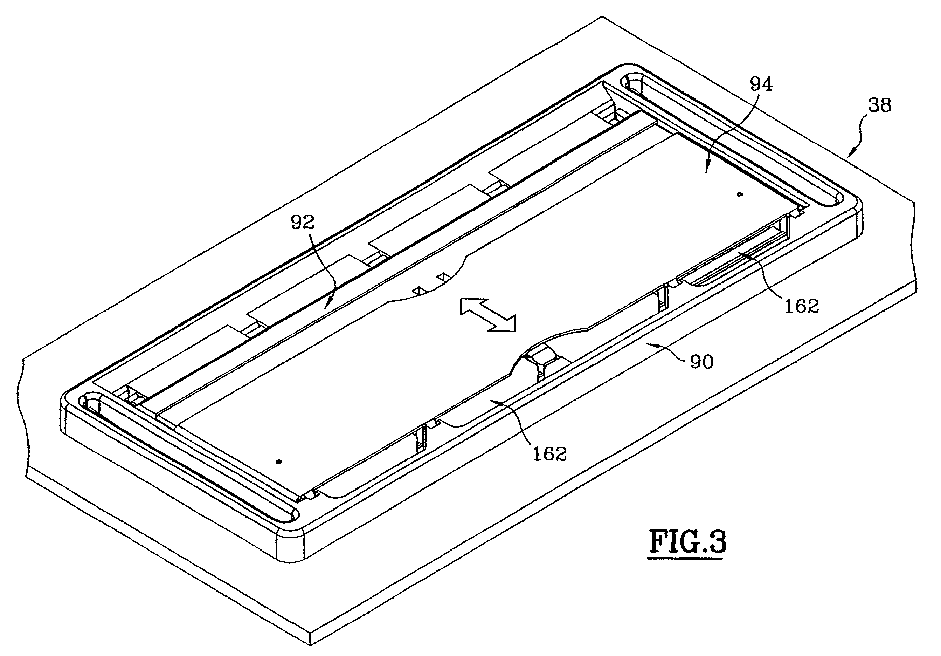

Outre les quatre socles inférieurs porte-contacts 48, le connecteur 32 comporte, comme on peut notamment le voir à la figure 3, un châssis-cadre 90 qui entoure les socles 48 et qui porte un couvercle supérieur articulé 92 qui porte les cartes C et qui est muni d'un organe 94 de verrouillage du couvercle 92 en position fermée.

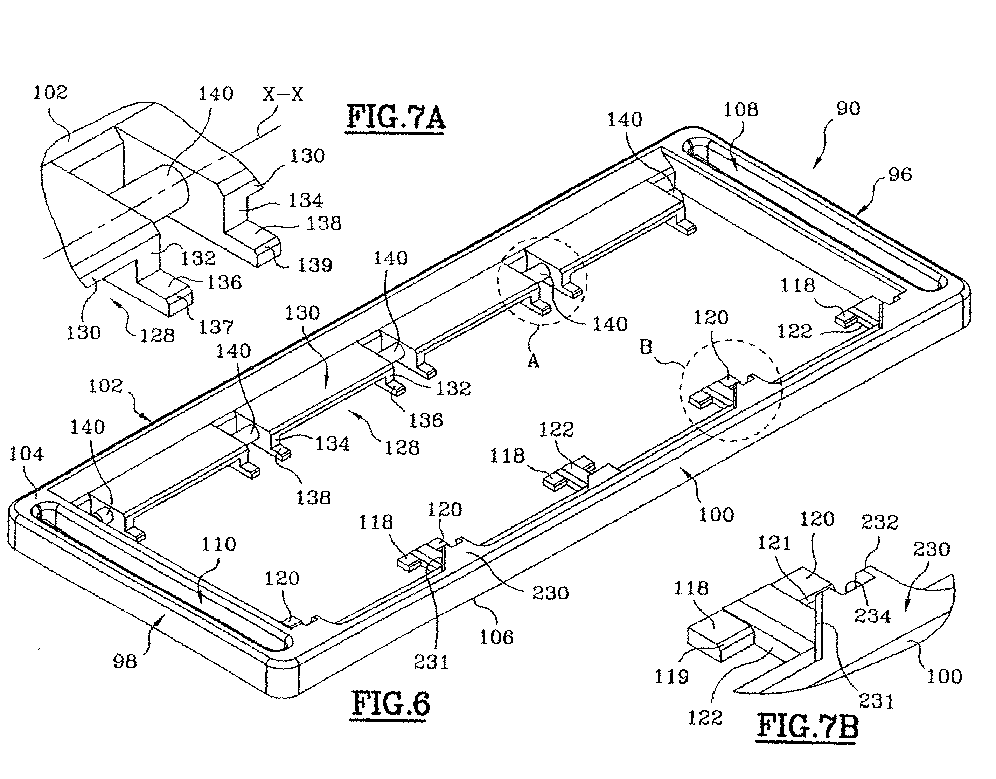

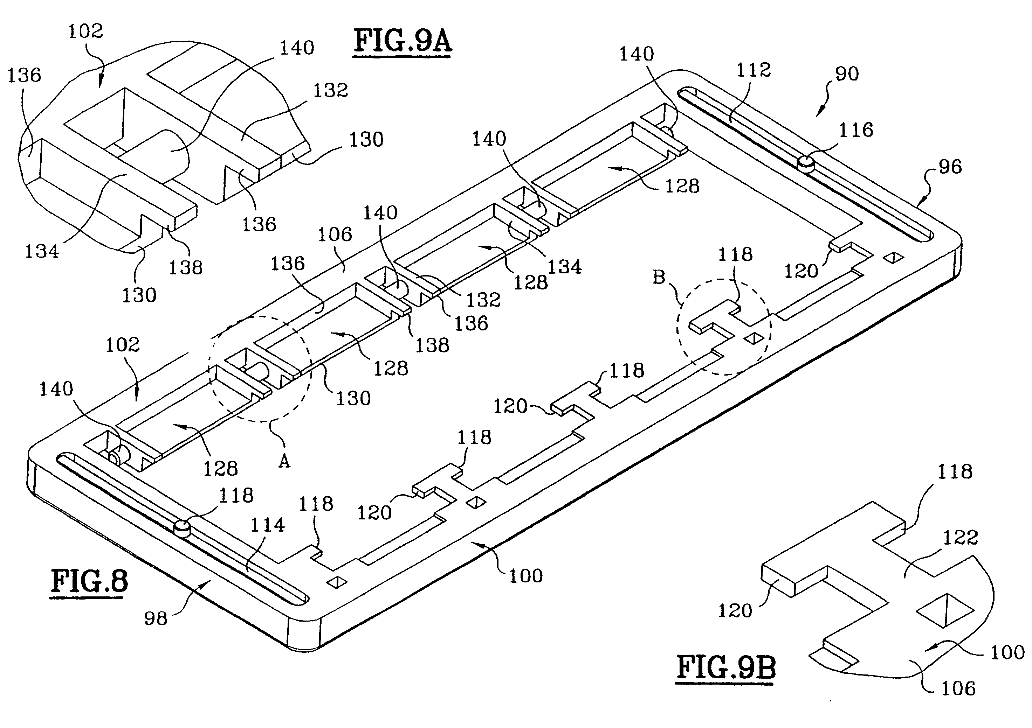

En se reportant notamment aux figures 6 et 8, on voir que le châssis-cadre 90 est une pièce moulée en matière plastique constituée pour l'essentiel par deux montants latéraux parallèles et opposés 96 et 98 qui sont reliés entre eux, au voisinage de leurs extrémités longitudinales avant et arrière, par deux traverses parallèles et opposées avant 100 et arrière 102.

Les montants 96, 98 et les traverses 100 et 102 ont une épaisseur totale commune correspondant à l'épaisseur globale du châssis-cadre 90 correspondant à la distance séparant sa face supérieure plane 104 de sa face inférieure plane 106 qui est prévue pour venir en appui contre la face supérieure 42 de la plaque 38.

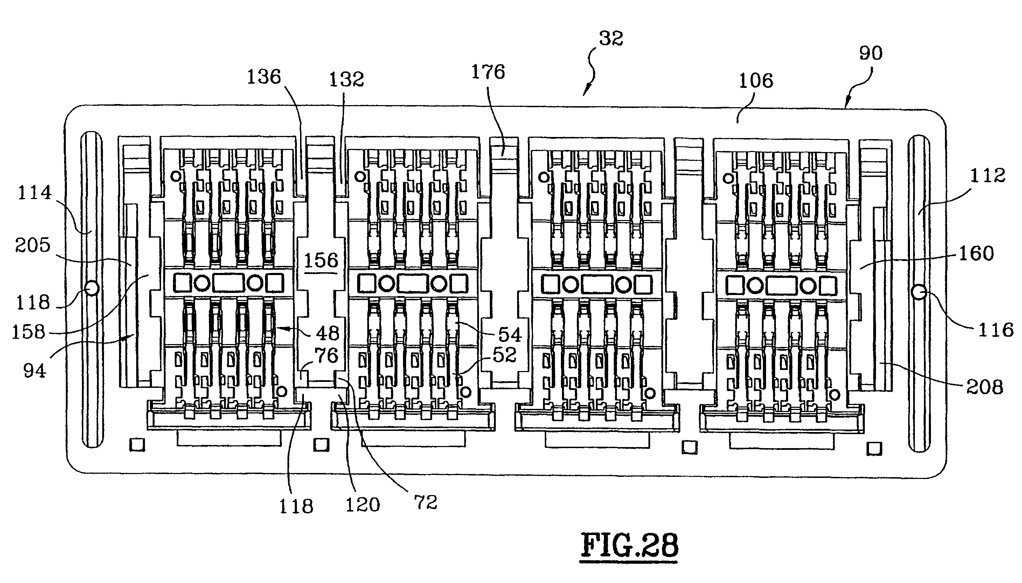

Les deux montants latéraux 96 et 98 sont de conception identique et chacun d'entre eux comporte un évidement central 108, 110 de manière à délimiter dans le fond de ces évidements deux poutres minces 112 et 114 (voir figures 8 et 28) dont chacune est susceptible de fléchir élastiquement dans le sens vertical et qui porte en son centre un pion cylindrique 116, 118 de positionnement longitudinal du châssis-cadre 90 par rapport à la plaque 42, chaque pion 116 étant prévu pour être reçu à cet effet dans l'un des trous 46 de la plaque 38.

Lorsque les poutres 112 et 114 sont au repos, comme on peut le voir par exemple à la figure 8, les pions 116 et 118 font saillie verticalement au-delà de la face inférieure 106 du châssis-cadre 90 et sont susceptibles d'être escamotés, par déformation élastique des poutres 112 et 114, dans les évidements 108 et 110 en vue de permettre le montage, qui sera expliqué par la suite, du châssis-cadre 90 sur la plaque 38 qui porte les socles 48.

Au voisinage de la face inférieure 106, la traverse avant 100 comporte quatre paires d'ergots 118 et 120.

Chaque ergot 118, 120 d'une paire se présente sous la forme d'un patin d'épaisseur réduite dont la face inférieure est coplanaire avec la face inférieure 106 de la traverse avant 100.

Les patins 118, 120 sont disposés longitudinalement à l'intérieur du châssis-cadre 90, c'est-à-dire en arrière de la traverse avant à laquelle ils sont reliés par des pattes longitudinales de liaison 122.

Chaque paire d'ergots 118, 120 comporte ainsi deux ergots opposés et éloignés transversalement l'un de l'autre qui sont susceptibles d'être reçus simultanément, comme cela sera expliqué par la suite, sous une paire de pattes de retenue 72, 76 respectivement appartenant à l'un des socles porte-contacts 48. La disposition longitudinale et transversale des ergots 118, 120 est bien entendu complémentaire de l'agencement et des dimensions des pattes 72 et 76 des socles 48, ainsi que de l'agencement des quatre socles 48 sur la plaque 38.

Comme on peut le voir notamment sur la figure 7B, les arêtes supérieures avant 119, 121 des ergots 118, 120, de même que les arêtes arrières 73, 77 des pattes 72, 76 sont chanfreinées de manière à faciliter l'engagement, par coulissement longitudinal d'arrière en avant, des ergots sous les pattes.

La traverse arrière 102 du châssis-cadre 90 comporte quatre réceptacles, de forme générale parallélépipédique rectangle, 128 dont chacun est susceptible de recevoir la partie arrière correspondante 88 de section rectangulaire d'un socle porte-contacts 48.

A cet effet, chaque réceptacle 128 est délimité par un toit horizontal 130 qui s'étend longitudinalement vers l'avant depuis la traverse arrière 102 et qui est décalé verticalement vers le bas par rapport au plan de la face supérieure 104 du châssis-cadre 90.

Chaque réceptacle 128 est aussi délimité par les faces internes en vis-à-vis de deux joues latérales opposées 132 et 134, et par un fond transversal arrière 136 dont les faces inférieures sont coplanaires avec la face inférieure 106 du châssis-cadre 90.

Chacune des joues 132, 134 se prolonge longitudinalement vers l'avant à l'intérieur du châssis-cadre 90 par un ergot en forme de patin 136, 138 respectivement.

Comme dans le cas des ergots 118 et 120, les ergots 136 et 138 sont d'épaisseur réduite et adjacents par leur face inférieure à la face supérieure 42 de la plaque 38.

Chaque réceptacle 128 est ainsi associé à une paire d'ergots 136, 138 dont chacun est prévu pour être reçu sous une patte de retenue 74, 78 respectivement d'un socle porte-contacts correspondant 48, l'introduction longitudinale d'arrière en avant des ergots 136, 138, sous les pattes 74, 78 étant facilitée par les arêtes chanfreinées 137, 139 des ergots 136, 138 et 75, 79 des pattes 74, 78.

Le châssis-cadre 90 comporte ainsi, pour sa fixation par un montage du type à baïonnette sur la carte 38 qui porte quatre socles porte-contacts 48, quatre fois deux paires d'ergots avant 118 - arrière 136 et avant 120 - arrière 138 qui sont susceptibles d'être reçues sous les paires de pattes correspondantes avant 72 - arrière 74 et avant 76 - arrière 78 d'un socle 48.

A partir des faces latérales externes des joues 132 et 134, s'étendent transversalement des tronçons 140 d'axe cylindrique qui sont alignés selon un axe géométrique transversal commun X-X qui est l'axe d'articulation du couvercle 92 sur le châssis 90, l'axe X-X étant ainsi agencé au voisinage de l'extrémité arrière du couvercle 92 et du châssis-cadre 90 ainsi qu'au voisinage des extrémités arrières 88 des socles porte-contacts 48.

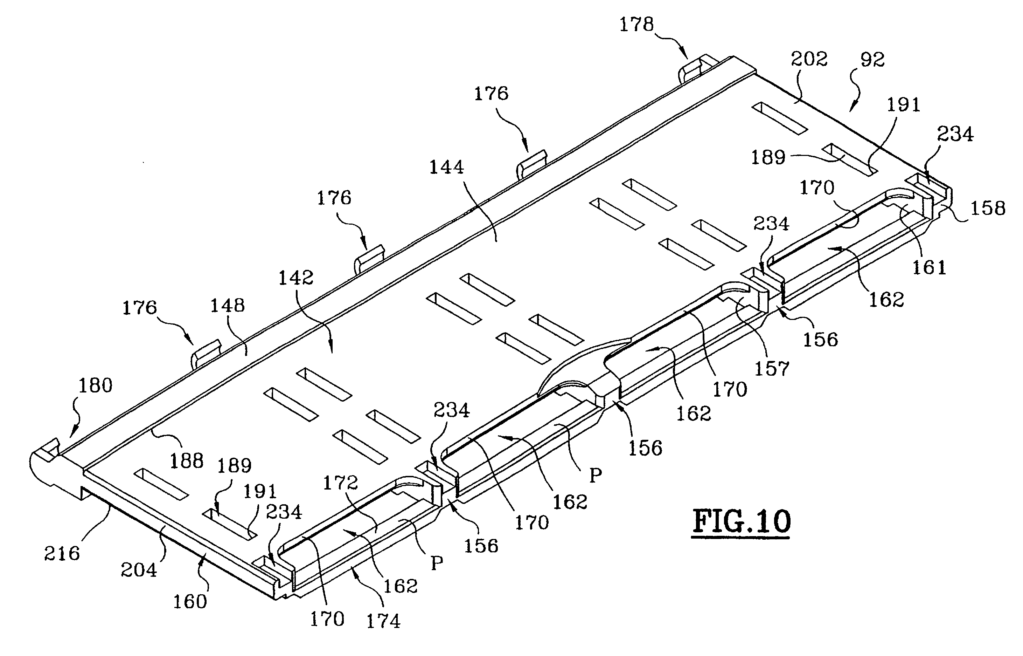

Les tronçons 140 d'axe cylindrique appartiennent aux moyens d'articulation du couvercle 92 qui va maintenant être décrit en détail, notamment en référence aux figures 10 à 12.

Le couvercle 92 est un élément de forme générale rectangulaire et il comporte notamment une plaque supérieure rectangulaire 142 d'épaisseur réduite délimitée par une face supérieure plane 144 et par une face inférieure plane opposée 146.

La plaque 142 est renforcée à son bord longitudinal arrière par une traverse arrière 148 dont une portion d'épaisseur réduite 150 fait saillie verticalement vers le bas, au-delà de la face inférieure 146, de manière que sa face transversale avant 152 constitue une butée longitudinale d'introduction des cartes C qui est susceptible de coopérer (voir figure 25) avec les bords transversaux avant correspondants 154 des cartes C.

Sur la face inférieure 146 de la plaque 142, le couvercle 92 comporte trois montants centraux parallèles et orientés longitudinalement 156 et deux montants latéraux et opposés 158 et 160, de largeur réduite.

Deux à deux, les montants centraux 156 et latéraux 158, 160 délimitent transversalement par leurs faces internes en vis à vis 157 et 159, 161 les quatre logements, adjacents transversalement, 162 dont chacun est susceptible de recevoir une carte C. Chaque logement 162 est délimité verticalement vers le bas par les faces supérieures 164 de glissières horizontales 166 qui s'étendent transversalement vers l'intérieur des logements 162 à partir des faces latérales internes 157 et 159, 161 des montants.

La distance séparant les faces supérieures 164 des glissières 166 de la face interne 146 de la plaque 142 est bien entendu légèrement supérieure à l'épaisseur des cartes C de manière à délimiter verticalement vers le bas et vers le haut chaque logement 162 pour constituer un canal d'introduction d'une carte C selon la direction I d'introduction de la carte C.

Afin de faciliter la mise en place d'une carte C dans son logement 162 du couvercle 92, chaque logement est partiellement ouvert, à son extrémité avant, dans la face supérieure du couvercle 92, c'est-à-dire que la plaque 142 comporte quatre dégagements 170, chacun au droit d'un logement 162, qui, outre le fait qu'ils facilitent l'introduction à fond et l'extraction des cartes C, dégagent chacun un plan P de pose d'une carte qui est constitué par la face supérieure plane 172 d'un barreau transversal 174 qui est coplanaire avec les faces supérieures 164 des glissières 166.

Chaque barreau 174 relie entre eux deux montants centraux adjacents 156 ou un montant central 156 avec son montant latéral adjacent 158 ou 160.

Au-delà de la traverse 148, chacun des montants centraux 156 ou latéraux 158, 160 se prolonge longitudinalement vers l'arrière pour constituer trois paliers centraux 176 et deux paliers latéraux 178, 180 dont chacun comporte un logement cylindrique, complémentaire d'un tronçon d'axe cylindrique 140 du châssis-cadre 90, qui est ouvert radialement vers l'extérieur pour permettre un montage des tronçons 140 dans les paliers 176, 178, 180 par emboîtement élastique.

Comme on peut le voir par exemple à la figure 10, chaque palier comporte une fente d'introduction des tronçons 140 qui s'étend radialement selon une direction perpendiculaire au plan du couvercle 92 et vers le haut.

Cet agencement est avantageux pour diverses raisons.

Tout d'abord, la réalisation des tronçons 140 avec le châssis-cadre 90 permet de les démouler aisément et il renforce la structure du châssis-cadre 90 en reliant notamment entre elles certaines des joues 136 et 138.

L'orientation des fentes des logements des paliers 176 à 180 permet, par exemple en vue d'un remplacement du couvercle 92, le démontage de ce dernier alors qu'il est dans une orientation sensiblement verticale (voir figure 25) d'arrière en avant par traction. Ainsi, un endommagement des paliers peut se produire lors du démontage, mais il est sans conséquence grave sur le connecteur dans la mesure où seul le couvercle 92 est remplacé et dans la mesure où il n'est pas nécessaire de démonter le châssis-cadre 90.

La conception qui vient d'être décrite du couvercle 92 permet de disposer d'un seul composant comportant quatre logements 162 susceptibles de recevoir des cartes C dont chacun a sa face inférieure presque entièrement évidée de manière que les plages conductrices 36 des cartes C puissent venir en contact avec les extrémités libres 54 des lames de contact 52 lorsque le couvercle 92 est en position fermée, c'est-à-dire lorsqu'il s'étend dans un plan sensiblement horizontal comme représenté notamment à la figure 3.

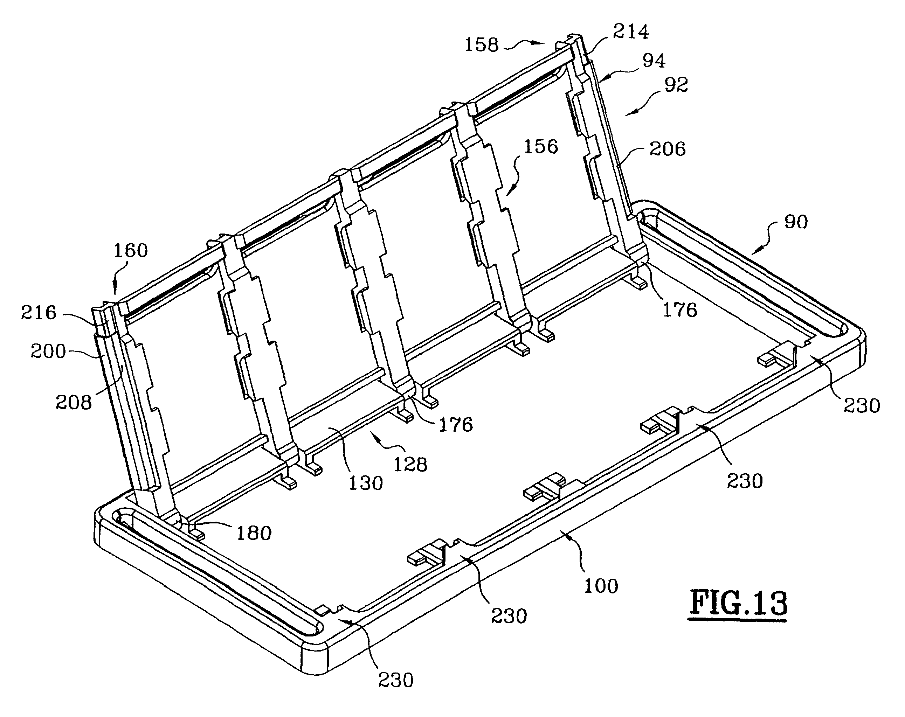

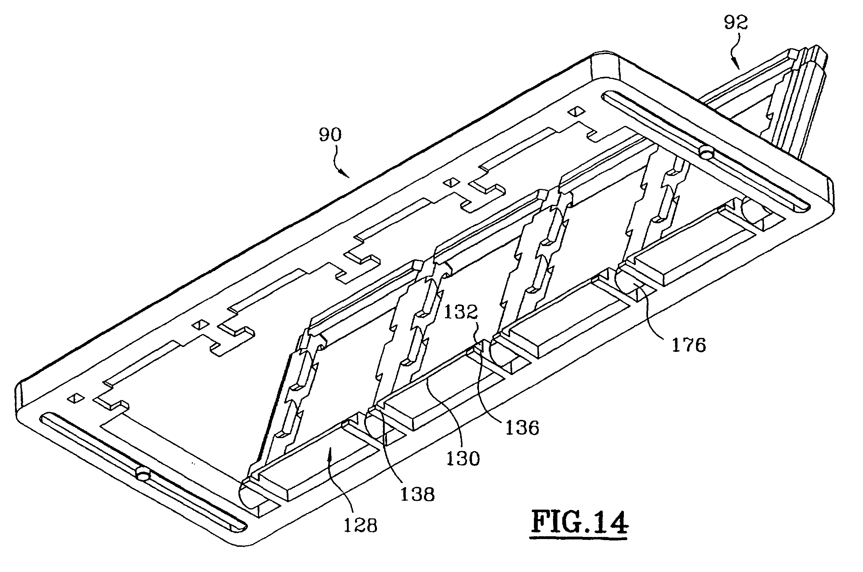

On a représenté aux figures 13 et 14 le sous-ensemble constitué par le couvercle 92 monté articulé sur le châssis-cadre 90, l'assemblage étant réalisé par l'emboîtement élastique des paliers 176 à 180 sur les tronçons d'axe d'articulation.

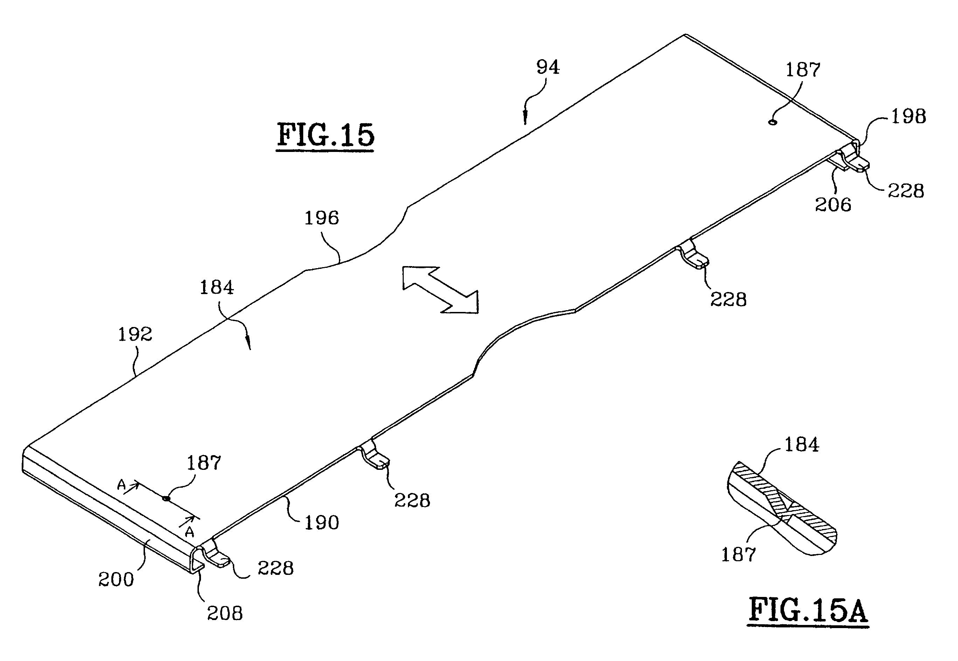

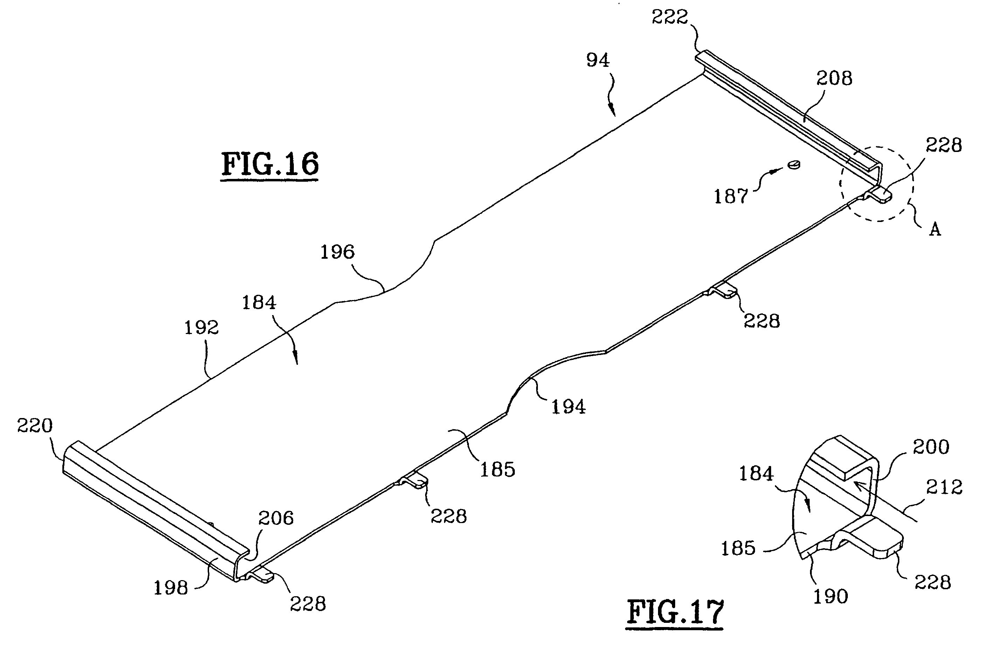

Sur ces figures, le couvercle 92 porte l'organe 94 de verrouillage du couvercle 92 en position fermée qui sera maintenant décrit en détail, notamment en référence aux figures 15 à 19B.

L'organe de verrouillage 94 est constitué pour l'essentiel par une pièce métallique en tôle pliée qui se présente sous la forme d'une plaque rectangulaire 184 qui, en position montée sur le couvercle, s'étend au-dessus de la face supérieure 144 de la plaque 142 du couvercle 92.

La partie supérieure en forme de plaque 184 de l'organe de verrouillage 94 présente une épaisseur légèrement inférieure à la partie en surépaisseur 188 de la traverse arrière 148 du couvercle 92.

La partie centrale de la plaque 184 peut présenter une flèche vers le bas de manière que sa face interne inférieure 185 coopère par friction avec la portion en vis-à-vis de la face supérieure 144 de la plaque 142 pour constituer un frein de verrou.

Le verrou 94 est retenu vers l'avant par rapport au couvercle grâce à deux ergots 187, réalisés sous la forme de crevés dans la plaque 184 et dont chacun est reçu dans une rainure 189 formée en vis-à-vis dans la face supérieure du couvercle 92. Chaque ergot 187 susceptible de coopérer avec l'extrémité avant de la rainure correspondante 189 pour constituer une butée longitudinale de retenue du verrou 94 sur le couvercle 94.

La plaque supérieure 184 est délimitée longitudinalement par deux bords transversaux avant 190 et arrière 192 dont chacun présente un dégagement central arrondi 194, 196.

Pour assurer son guidage en coulissement sur le couvercle 92, la plaque supérieure 184 se prolonge verticalement vers le bas à ses deux extrémités opposées par deux joues latérales verticales 198, 200 qui s'étendent le long des faces transversales externes d'orientation verticale 202 et 204 des montants latéraux 158 et 160 du couvercle 192.

Au-delà des joues 198, 200, la plaque 184 se prolonge horizontalement vers l'intérieur par deux pattes horizontales et opposées 206, 208 de guidage qui s'étendent en vis-à-vis l'une de l'autre.

Ainsi, chaque joue 198, 200 en association avec une patte 206, 208 constitue un couloir 210, 212 de guidage longitudinal du verrou 94 sur le couvercle 92.

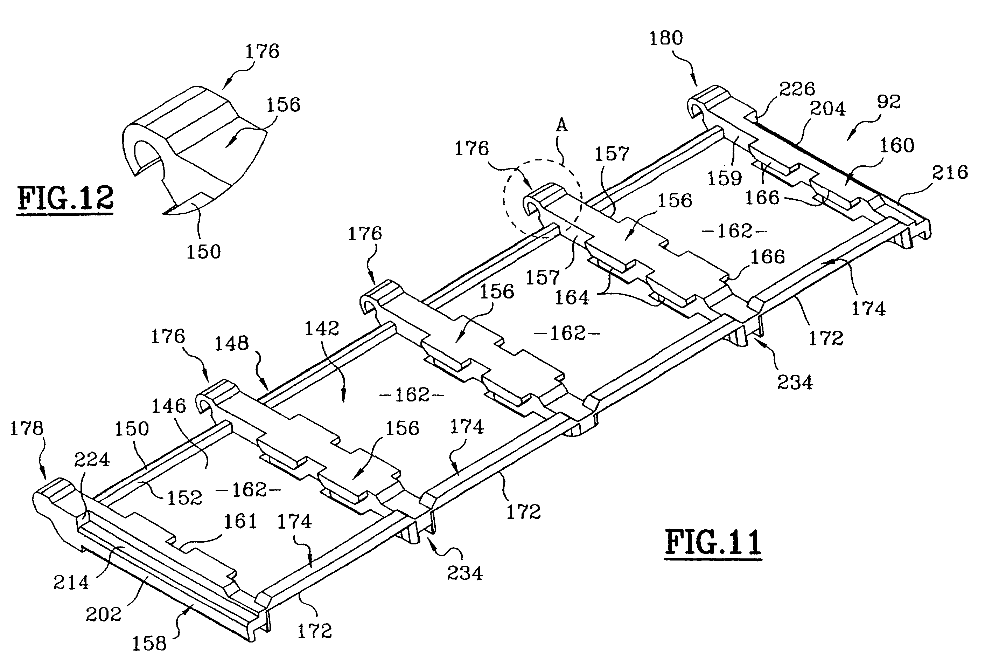

Comme on peut le voir plus particulièrement aux figures 11 et 13, les pattes 206 et 208 sont reçues en coulissement le long de facettes 214 et 216 correspondant aux fonds de dégagement longitudinaux formés dans les faces inférieures des montants latéraux 158 et 160.

Le verrou 94 est ainsi monté coulissant entre une position extrême arrière déverrouillée qui est délimitée par la venue en butée des bords d'extrémité arrière 220 et 222 des joues 198, 200 et pattes 206, 208 contre les facettes verticales correspondantes 224 et 226 formées en vis-à-vis à l'arrière des montants latéraux, et une position extrême avant verrouillée dans laquelle le verrou 94 coopère avec le châssis-cadre 90 pour empêcher tout mouvement de pivotement du couvercle 92 autour de l'axe X-X par rapport au châssis-cadre 90.

A cet effet, la plaque 184 comporte quatre pattes de verrouillage 228 qui s'étendent longitudinalement vers l'avant à partir de son bord transversal avant 190 et dans un plan horizontal décalé vers le bas par rapport au plan de plaque supérieure 184 du verrou 94.

Chacune des pattes 228 est susceptible d'être reçue sous une extension 230 réalisée venue de matière par moulage avec la traverse avant 100 du châssis-cadre 90.

Comme on peut le voir plus particulièrement aux figures 6 et 7B, chaque extension 230 est une portion de plaque qui s'étend longitudinalement vers l'arrière à l'intérieur du châssis-cadre 90, dans le plan de la face supérieure 104, et qui comporte, dans son bord transversal arrière 232 un cran 234 pour permettre le passage des coudes de raccordement des pattes de verrouillage 228 lors du mouvement de verrouillage.

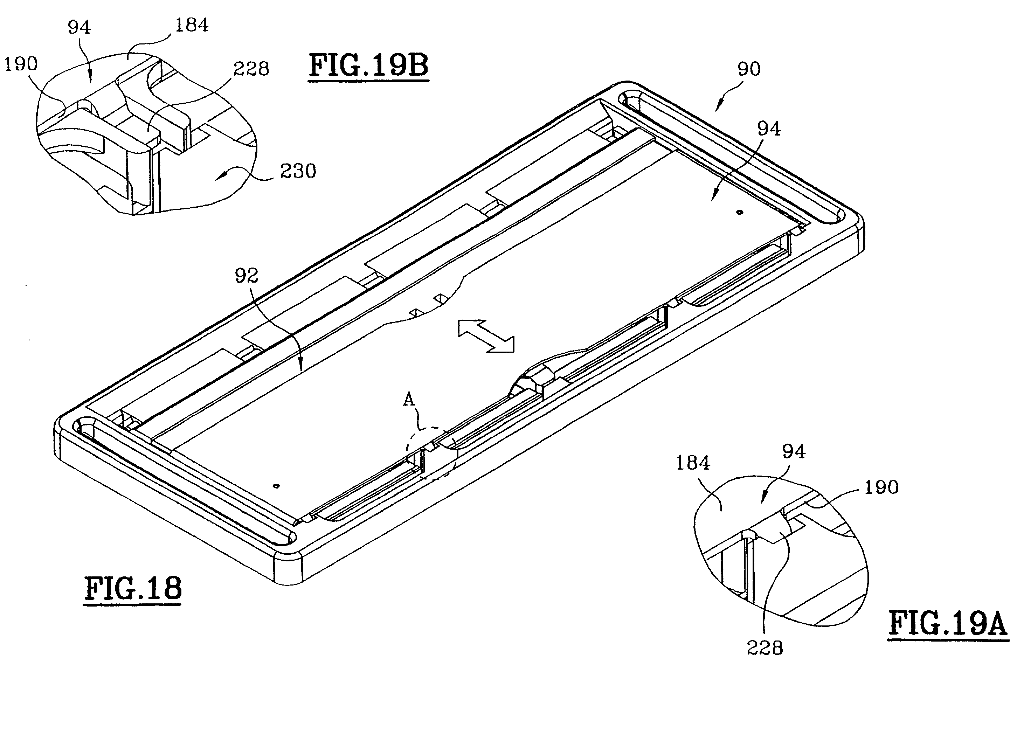

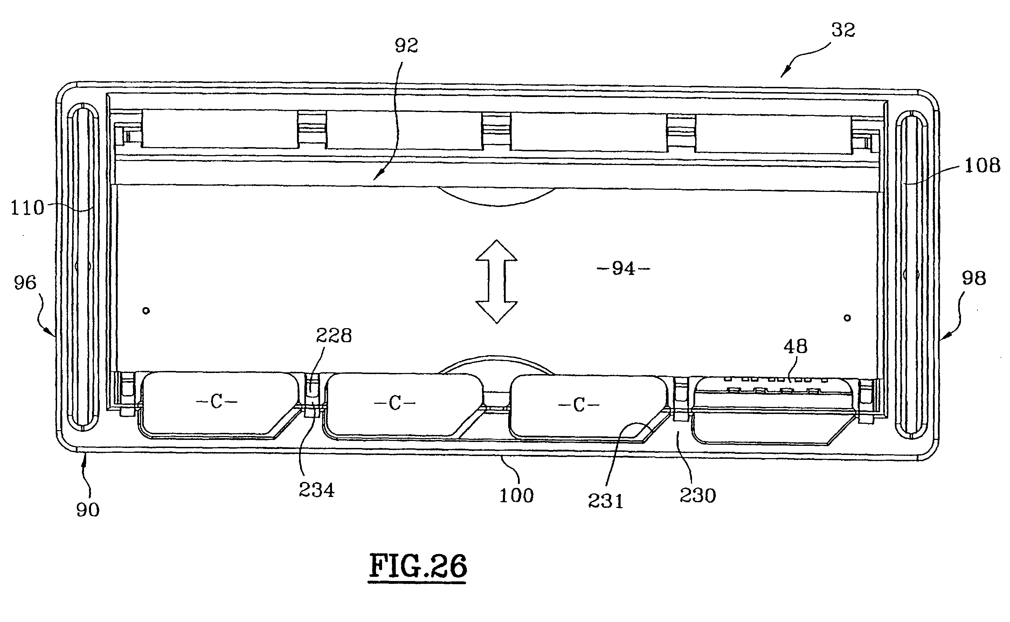

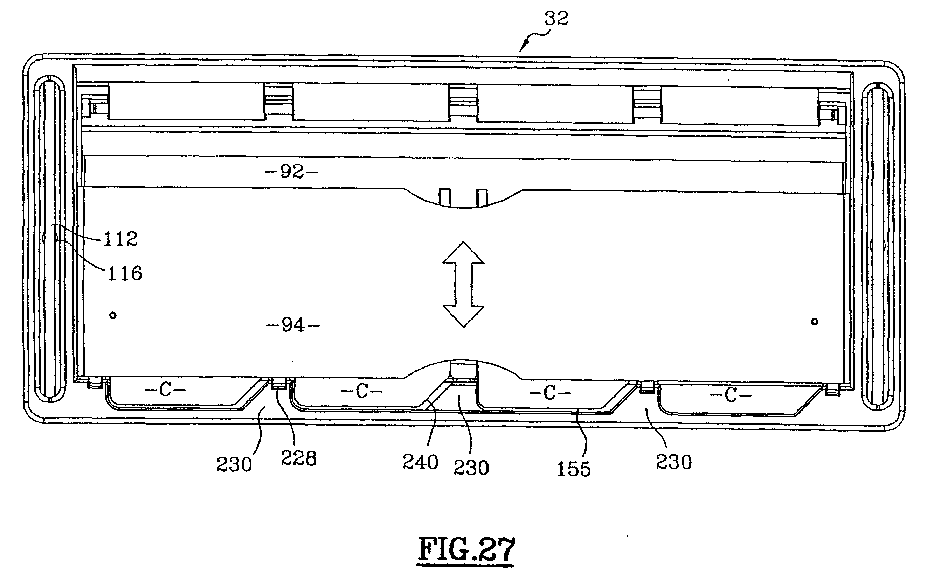

Comme on peut le voir aux figures 19A et 19B ainsi qu'aux figures 26 et 27, l'extrémité libre avant de chaque patte de verrouillage 228 est en retrait par rapport au bord arrière de la portion de plaque 230 lorsque l'organe de verrouillage est en position déverrouillée, et elle s'étend sous la portion de plaque 230 lorsque le verrou 94 est en position extrême avant verrouillée, position dans laquelle il devient alors impossible de soulever le couvercle, c'est-à-dire d'ouvrir le connecteur.

Pour permettre la fermeture du couvercle 92 et le coulissement du verrou 94 au-dessus de la face supérieure 144 du couvercle 92, deux des montants centraux 156 et les montants latéraux 158 et 160 comportent, au voisinage de leurs extrémités longitudinales avant, des évidements d'orientation longitudinale 234 ouverts dans la face supérieure 144 et dont chacun reçoit en coulissement une patte 228 correspondante.

Dans le cas où, comme cela est illustré sur les figures, les cartes C sont des cartes du type "MICRO-SIM" dont le bord transversal arrière 155 comporte, à l'un des angles de la carte, un pan coupé 240, les portions de plaque 230 qui coopèrent avec les pattes de verrouillage 228 sont délimitées latéralement, vers la gauche en considérant par exemple les figures 26 et 27, par des bords inclinés correspondants 231.

Au cas où l'une des cartes C n'est pas introduite dans le bon sens, il est impossible de fermer complètement le couvercle 92 et il est impossible de verrouiller le verrou 94 dans la mesure où les pattes 228 viennent alors buter contre les portions en vis-à-vis des portions de pattes 230.

On décrira maintenant le mode de montage et de fixation, du type à baïonnette, du sous-ensemble, constitué par le châssis-cadre 90, le couvercle 92 et le verrou 94, sur la plaque à circuit imprimé 38 équipée des socles 48 telle qu'elle se présente dans la conformation illustrée à la figure 2.

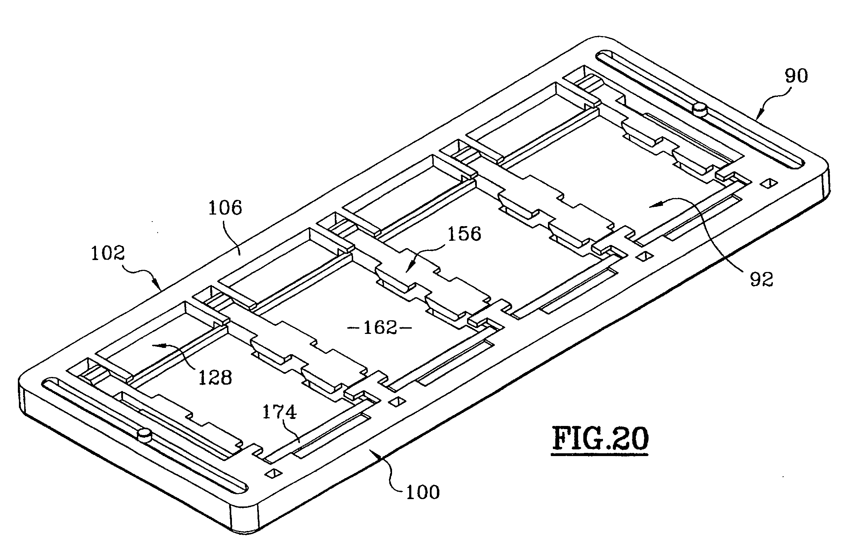

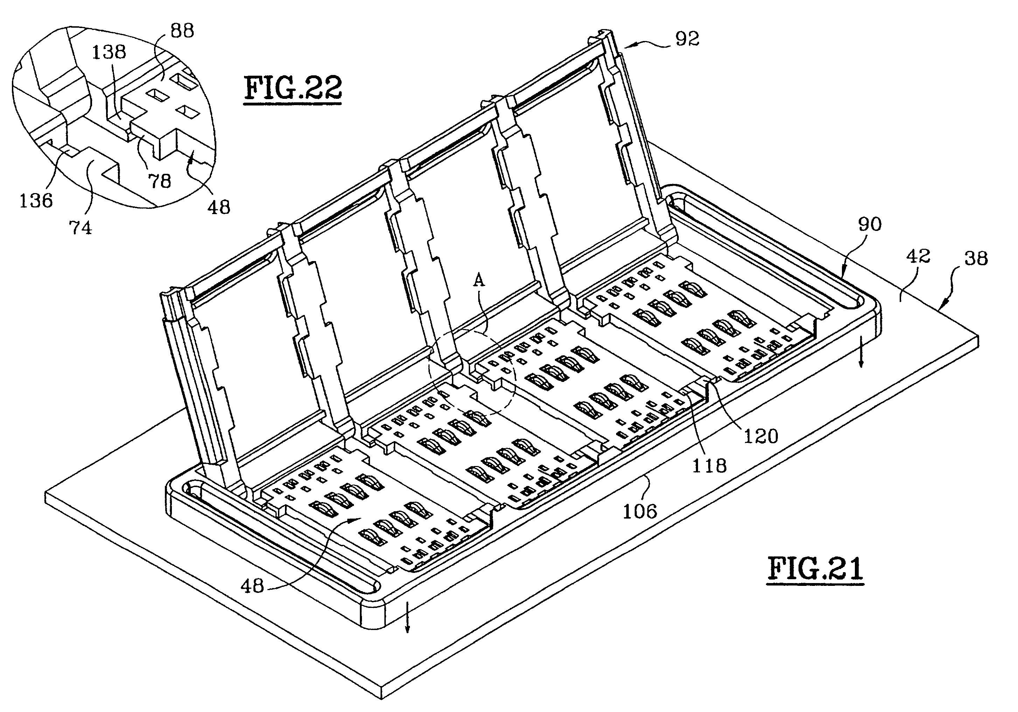

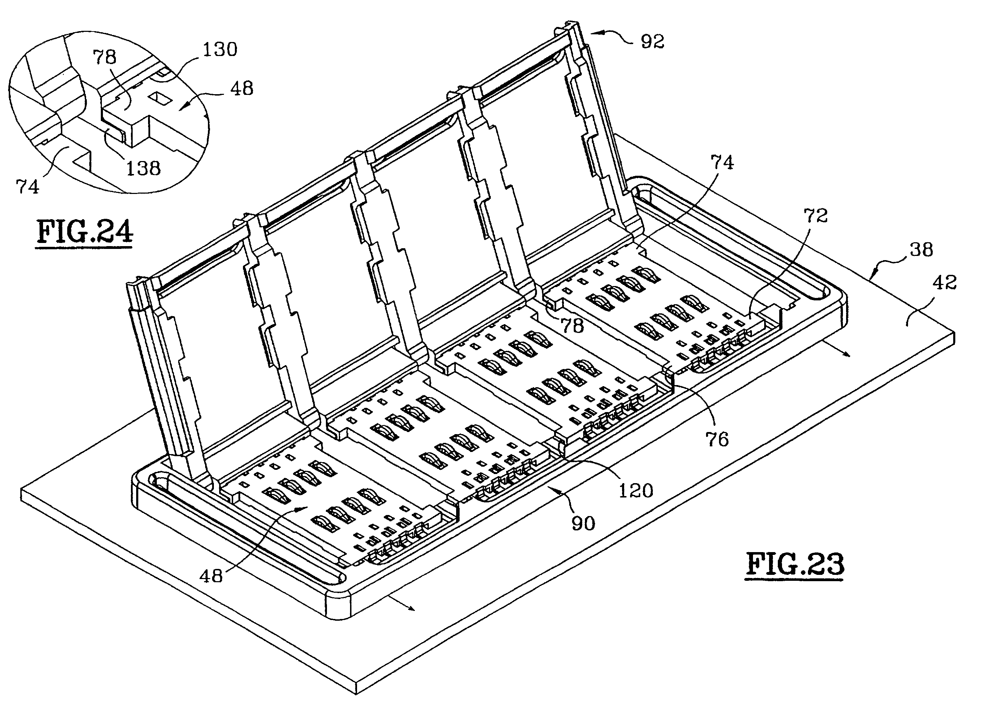

Pour expliquer ce montage, on se reportera notamment aux figures 21 à 24 sur laquelle ce sous-ensemble est illustré en position d'ouverture maximale du couvercle 92 par rapport au socle 90 alors que, dans la pratique, la fixation est de préférence réalisée avec le couvercle 92 en position fermée et verrouillée, tel qu'il est par exemple illustré à la figure 20, c'est-à-dire dans une conformation dans laquelle le sous-ensemble 90, 92, 94 est livré.

Le montage et la fixation du type à baïonnette est effectué en deux étapes.

La première étape est illustrée aux figures 21 et 22 dans laquelle on amène verticalement le châssis-cadre 90 qui porte le couvercle 92 au-dessus de la plaque 38 jusqu'à ce que sa face inférieure 106 vienne en appui vertical sur la face supérieure 42 de la plaque 38.

La position longitudinale du cadre 90 par rapport aux socles 48 est alors telle que les ergots 118, 122, 136 et 138 sont décalés longitudinalement vers l'arrière par rapport aux pattes de retenue 72, 76, 74 et 78 et telle que les pions 116 et 118 ne sont pas en regard des trous 46 de la plaque, c'est-à-dire que l'on déforme les poutres élastiques 112 et 114 pour escamoter les pions 116 et 118 dans les évidements 108 et 110.

Une fois cette position illustrée aux figures 21 et 22 atteinte, le montage comporte une seconde opération de translation ou de coulissement longitudinal, d'arrière en avant du châssis-cadre 90 le long de la face supérieure 42 de la plaque 38 pour engager les ergots sous les pattes de retenue verticale, cette opération de coulissement se terminant lorsque les pions d'indexation 116 et 118 tombent automatiquement, sous l'action des poutres élastiques 112 et 114, dans les trous 46.

Dans cette position, le châssis 90 est immobilisé longitudinalement par rapport à la plaque 38 et les ergots sont sous les pattes de retenue verticale et il n'est donc plus possible de démonter le châssis-cadre 90 qui est fixé sur la plaque 38, sauf à venir repousser verticalement les pions 116, 118 de bas en haut en accédant à la face inférieure de la plaque 38.

Au cours du mouvement d'engagement par coulissement longitudinal des ergots sous les pattes de retenue, la partie d'extrémité arrière 88 de chaque socle porte-contacts 48 pénètre dans le réceptacle correspondant 128.

La conception selon l'invention permet d'introduire en même temps plusieurs cartes C et de les amener en position de contact et de verrouiller l'ensemble en une seule opération.

Les socles porte-contacts 48 sont des pièces indépendantes et identiques de petites dimensions qui peuvent être aisément montées et brasées en refusion comme tous les autres composants mécaniques équipant la plaque 38, tandis que le châssis-cadre avec le couvercle 92 est assemblé ultérieurement avec les autres pièces plastiques de l'équipement.

Le nombre de pièces est aussi particulièrement réduit dans la mesure où il est fait appel à un seul couvercle et à un seul verrou.

Hormis les socles, les autres pièces en matière plastique ne sont pas soumises au choc thermique important résultant des opérations de soudage par refusion, et elles peuvent donc être réalisées dans un matériau plus économique ne possédant pas de propriétés particulières pour résister à la dilatation.

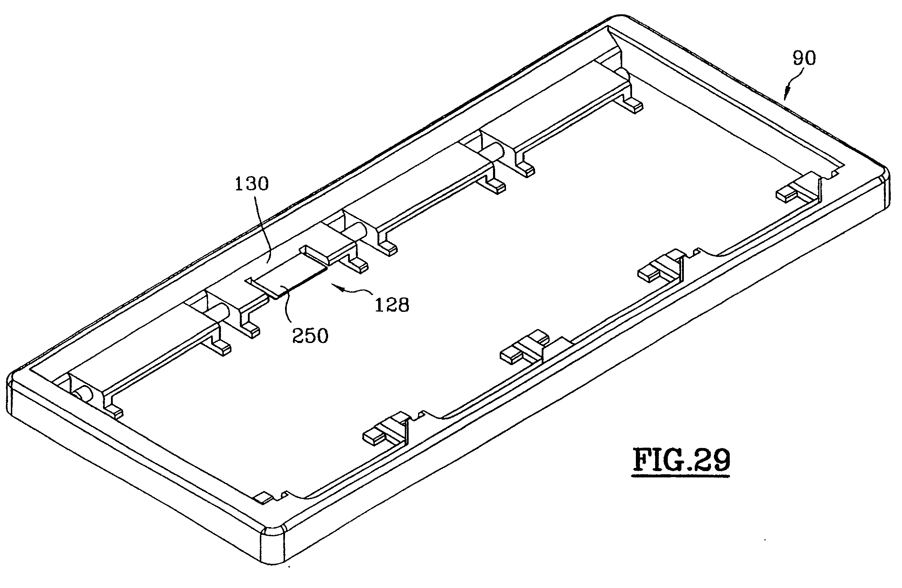

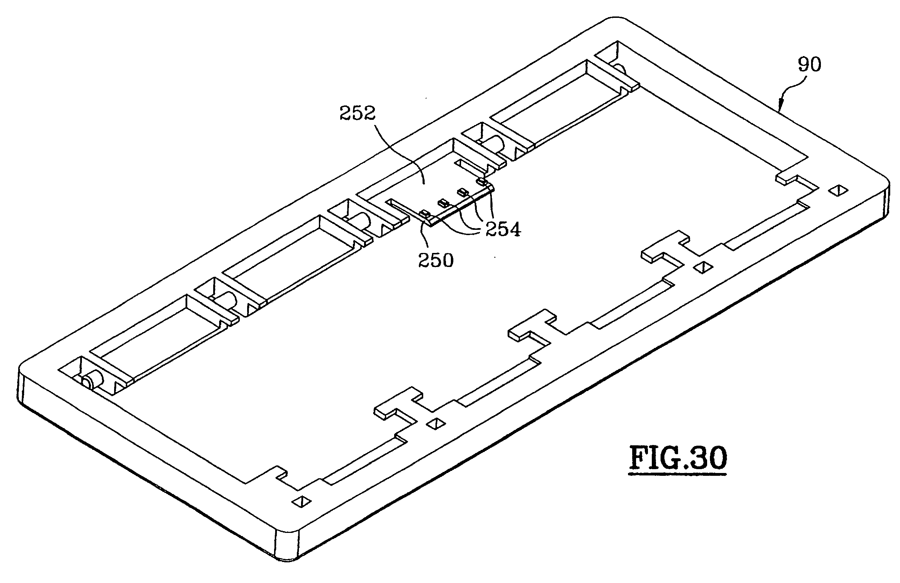

Dans la variante de réalisation illustrée aux figures 29 et 30, les moyens d'immobilisation longitudinale du châssis-cadre 90 interviennent directement entre le châssis-cadre 90 et les socles 48.

Ces moyens sont ici constitués par au moins une patte ou languette 250 d'indexation et de blocage qui prolonge longitudinalement vers l'avant un toit 130 de l'un des réceptacles 128 pour s'étendre à la manière d'une poutre dont l'extrémité est déformable élastiquement dans le sens vertical et dont la face inférieure 252 comporte une série de plots en relief 254, qui peuvent être chanfreinés à l'avant, et qui sont reçus dans des trous complémentaires (voir figure 4) 256 formés dans la face supérieure de la partie d'extrémité arrière 88 du corps 50 du socle porte-contacts 48 correspondant.

La variante illustrée aux figures 29 et 30 est utilisée en association avec des socles dont le positionnement sur la plaque 38 est automatique par capillarité lors du soudage par refusion, et elle ne nécessite donc pas de trous dans la plaque à circuit imprimé 38, c'est-à-dire que cette solution est notamment avantageuse dans le cas où les deux faces de la plaque 38 sont utilisées pour le report à plat de composants électroniques.

Selon cette variante, les montants latéraux du cadre sont de conception simplifiée et l'encombrement transversal du châssis-cadre 90 est réduit.

Selon une variante non représentée de l'invention, il peut être prévu des moyens déformables élastiquement qui rappellent automatiquement le couvercle 92 dans le sens de l'ouverture par rapport au châssis-cadre 90 et/ou par rapport aux socles porte-contacts 48.

Selon une autre variante, des ouvertures peuvent être aménagées dans le verrou 94 et dans la plaque supérieure du couvercle 92 au droit des extrémités 54 des lames 52 pour faciliter les opérations de test de l'équipement sans les cartes C.

Selon une variante, il peut être prévu des moyens du type à crans et encoches intervenant entre le verrou coulissant et le couvercle pour bloquer le verrou dans ses deux positions extrêmes.

Selon une caractéristique qui n'est pas illustrée sur les figures, chaque socle porte-contacts est équipée d'un commutateur de détection de la présence de la carte correspondante.

Outre les applications mentionnées en introduction, un connecteur « multicartes » selon l'invention trouve aussi à s'appliquer pour la réalisation de terminaux de décodage de plusieurs signaux de télédiffusion nécessitant un péage pour l'accès aux programmes correspondants. L'intégration de plusieurs accès dans un même terminal est ainsi facilitée pour les utilisateurs qui peuvent très simplement incorporer les cartes d'abonnement correspondantes dans le terminal équipé d'un connecteur selon l'invention, au fur et à mesure de leurs souscriptions à de tels abonnements.

## Revendications

1. Connecteur électrique (32) pour le raccordement électrique simultané d'au moins deux cartes (C) à circuit(s) intégré(s) à contact dont les faces inférieures (25) comportent des plages (36) de raccordement, **caractérisé en ce qu'**il comporte :
- au moins deux socles inférieurs (48) indépendants et identiques en forme de plaque en matériau isolant, qui sont adjacents transversalement, dont chacun forme support pour une série d'éléments (52) de contact électrique dont des extrémités libres (54) de contact font saillie au delà du plan de la face supérieure (56) du socle correspondant pour coopérer avec les plages (36) de raccordement d'une des cartes (C), et dont chacun est fixé sur une plaque inférieure commune (38), notamment une plaque à circuit imprimé, sur laquelle il prend appui par sa face inférieure (64) ;
- un couvercle supérieur (92) porte-cartes unique
qui comporte au moins deux logements (162) indépendants, coplanaires, adjacents transversalement et dont chacun peut recevoir, au moins partiellement, une carte (C) introduite longitudinalement dans son logement, d'avant en arrière, selon une direction (I) parallèle à son plan général et à celui du couvercle,
et qui est monté pivotant par rapport aux socles (48), autour d'un axe (X-X) transversal d'articulation situé au voisinage des extrémités longitudinales arrière (88) des socles (48) et du couvercle (92), entre une position fermée de contact dans laquelle les plages (36) de raccordement de chaque carte (C) en place dans son logement (162) coopèrent avec les extrémités (54) de contact du socle correspondant, et une position ouverte permettant la mise en place ou l'extraction d'une ou plusieurs cartes ;
- et un organe (94) de verrouillage du couvercle (92) en position fermée.

2. Connecteur selon la revendication précédente, **caractérisé en ce qu'**il comporte un châssis (90) en forme de cadre rectangulaire qui entoure les socles adjacents (48), qui est fixé sur la plaque inférieure (38), et sur lequel le couvercle (92) est monté pivotant.

3. Connecteur selon la revendication précédente, **caractérisé en ce que** le châssis-cadre (90) est fixé sur la plaque inférieure (38) et sur les socles (48) par l'intermédiaire de moyens de montage du type à baïonnette.

4. Connecteur selon la revendication précédente, **caractérisé en ce que** le châssis-cadre (90) comporte des ergots (118, 120, 136, 138) de fixation qui s'étendent dans le plan général du châssis-cadre, qui sont adjacents à la face supérieure (42) de la plaque inférieure (38) et qui sont susceptibles d'être introduits, par coulissement longitudinal d'arrière en avant, sous des pattes (72, 76, 74, 78), de retenue verticale du châssis-cadre (90), qui s'étendent transversalement dans un plan horizontal à partir des bords (68, 70) parallèles longitudinaux et opposés des socles (48).

5. Connecteur selon la revendication précédente, **caractérisé en ce que** chaque socle (48) comporte quatre pattes de retenue agencées par paires (72-74, 76-78) le long de ses deux bords longitudinaux parallèles (68, 70) et au voisinage des extrémités longitudinales avant et arrière de ces bords.

6. Connecteur selon l'une quelconque des revendications 2 à 5, **caractérisé en ce que** le châssis-cadre (90) comporte des moyens (116, 118) d'indexation de sa position longitudinale par rapport à la plaque inférieure (38, 46) commune aux différents socles (48).

7. Connecteur selon l'une quelconque des revendications 2 à 6, **caractérisé en ce que** le châssis-cadre (90) comporte deux montants latéraux parallèles et opposés (96, 98) qui sont reliés, au voisinage de leurs extrémités longitudinales par deux traverses avant et arrière (100, 102), et **en ce que** l'épaisseur verticale du châssis-cadre est supérieure à la hauteur des socles (48) et du couvercle (92) en position fermée.

8. Connecteur selon la revendication précédente prise en combinaison avec la revendication 6, **caractérisé en ce que** lesdits moyens d'indexation comportent une paire de pions verticaux d'indexation (116, 118) dont chacun est porté par une portion (112, 114) déformable élastiquement de l'un des montants latéraux (96, 98) du châssis-cadre à partir de laquelle il s'étend verticalement au delà du plan de la face inférieure (106) du châssis-cadre pour être reçu dans un trou complémentaire (46) de la plaque inférieure (38).

9. Connecteur selon l'une des revendications 2 à 5, **caractérisé en ce que** le châssis-cadre (90) comporte des moyens (250, 254) d'indexation de sa position longitudinale par rapport aux socles (48).

10. Connecteur selon l'une quelconque des revendications 2 à 9, **caractérisé en ce que** l'organe de verrouillage (94) intervient entre le couvercle (92) et le châssis-cadre (90).

11. Connecteur selon la revendication précédente, **caractérisé en ce que** l'organe de verrouillage (94) est monté coulissant longitudinalement d'avant en arrière sur le couvercle (92) entre une position avant verrouillée dans laquelle des moyens de verrouillage (228) de l'organe de verrouillage coopèrent avec des moyens complémentaires (230) formés dans le châssis-cadre (90), et une position arrière déverrouillée.

12. Connecteur selon la revendication précédente prise en combinaison avec la revendication 7, **caractérisé en ce que** lesdits moyens de verrouillage comportent une série de pattes de verrouillage (228) qui s'étendent longitudinalement à partir d'un bord transversal avant (190) de l'organe (94) de verrouillage et dont chacune est reçue sous une butée (230) de verrouillage qui s'étend longitudinalement vers l'arrière depuis la traverse avant (100) du châssis-cadre (90).

13. Connecteur électrique selon l'une quelconque des revendications précédentes, **caractérisé en ce que** chaque logement (162) de la carte (C) est ouvert partiellement dans la face supérieure du couvercle, et **en ce que** le fond du logement, contre lequel la carte prend appui par sa face inférieure, est évidé au moins partiellement de manière à dégager la partie de la face inférieure (34) de la carte (C) en regard des plages (36) de raccordement.

14. Connecteur selon la revendication précédente, **caractérisé en ce qu'**une plate-forme de pose de la carte (C) en forme de barreau (174) est agencée au voisinage de l'extrémité avant de chaque logement (162) et sa face supérieure (172) définit un plan (P) de pose de la carte (C) correspondante.

15. Connecteur selon l'une des revendications précédentes, **caractérisé en ce que** l'organe de verrouillage (94) est une plaque transversale (184) qui est montée coulissante au dessus de la face supérieure (142, 144) du couvercle, et **en ce que** ses extrémités transversales opposées (198, 200) sont repliées verticalement le long de faces transversales externes (202, 204) de montants latéraux (158, 160) du couvercle, puis transversalement vers l'intérieur sous la forme de deux pattes (206, 208) de manière à délimiter deux couloirs (210, 212) de guidage de la plaque de verrouillage (184) sur le couvercle (92, 142).

16. Connecteur selon la revendication 7, **caractérisé en ce que** des moyens d'articulation du couvercle sur le châssis-cadre sont constitués par des tronçons (140) d'axe d'articulation portés par la traverse arrière (102) du châssis-cadre, et par autant de logements cylindriques complémentaires (176, 178, 180) dont chacun est formé à l'extrémité arrière du couvercle.

17. Connecteur selon la revendication précédente, **caractérisé en ce que** les logements cylindriques sont ouverts radialement selon une direction sensiblement perpendiculaire à la face supérieure (142) du couvercle (92) pour permettre le montage des tronçons d'axe (140) dans les logements par emboîtement élastique selon ladite direction radiale.

18. Connecteur selon la revendication 2, **caractérisé en ce qu'**il comporte des moyens élastiques qui sollicitent en permanence le couvercle, par rapport au châssis-cadre, vers sa position ouverte.

19. Connecteur selon l'une quelconque des revendications précédentes, **caractérisé en ce que** chaque socle comporte un commutateur électrique de détection de la présence d'une carte en position de lecture/écriture.

## Patentansprüche

1. Elektrischer Verbinder (32) zum gleichzeitigen elektrischen Anschließen von wenigstens zwei Karten (C) mit wenigstens einer integrierten Schaltung mit Kontakt. deren Unterseiten (25) Anschlussbereiche (36) aufweisen, **dadurch gekennzeichnet, dass** er folgendes aufweist:
- wenigstens zwei unabhängige und identische untere Sockel (48) in Form einer Platte aus isolierendem Material, die in Querrichtung benachbart sind, von denen jeder einen Träger für eine Folge von elektrischen Kontaktelementen (52) bildet, deren freie Kontaktenden (54) über die Ebene der Oberseite (56) des entsprechenden Sockels überstehen, um mit den Anschlussbereichen (36) einer der Karten (C) zusammenzuwirken, und von denen jeder an einer gemeinsamen unteren Platte (38), insbesondere einer gedruckten Leiterplatte, befestigt ist, auf der er mit seiner Unterseite (64) aufliegt;
- einen einzigen oberen Kartenträgerdeckel (92),
der wenigstens zwei unabhängige, koplanare, in Querrichtung benachbarte Aufnahmen (162) aufweist, von denen jede wenigstens zum Teil eine Karte (C) aufnehmen kann, die in Längsrichtung von vorn nach hinten in einer zu ihrer allgemeinen Ebene und derjenigen des Deckels parallelen Richtung (I) in ihre Aufnahme eingerührt wird,
und der im Bezug auf die Sockel (48) um eine in der Nähe der hinteren Längsenden (88) der Sockel (48) und des Deckels (92) angeordnete Quer-Gelenkachse (X-X) zwischen einer geschlossenen Kontaktposition, in der die Anschlussbereiche (36) jeder in ihrer Aufnahme (162) platzierten Karte (C) mit den Kontaktenden (54) des entsprechenden Sockels zusammenwirken, und einer offenen Position. die das Einbringen oder Herausnehmen einer oder mehrerer Karten ermöglicht, schwenkbar ist;
- und ein Organ (94) zum Verriegeln des Deckels (92) in geschlossener Position.

2. Verbinder nach dem vorhergehenden Anspruch, **dadurch gekennzeichnet, dass** er ein Gestell (90) in Form eines rechteckigen Rahmens aufweist, das die benachbarten Sockel (48) umgibt, der auf der unteren Platte (38) befestigt ist. und auf dem der Deckel (92) schwenkbar montiert ist.

3. Verbinder nach dem vorhergehenden Anspruch, **dadurch gekennzeichnet, dass** das Rahmengestell (90) an der unteren Platte (38) und an den Sockeln (48) über Montagemittel vom Bajonett-Typ befestigt ist.

4. Verbinder nach dem vorhergehenden Anspruch, **dadurch gekennzeichnet, dass** das Rahmengestell (90) Befestigungszapfen (118, 120, 136, 138) umfasst, die sich in der allgemeinen Ebene des Rahmengestells erstrecken, die an die Oberseite (42) der unteren Platte (38) angrenzen, und die in der Lage sind, durch Längsgleiten von hinten nach vorn unter Vertikal-Halteklauen (72, 76, 74, 78) des Rahmengestells (90) eingeführt zu werden, die sich in Querrichtung in einer horizontale Ebene von den parallelen und gegenüberliegenden Längsrändern (68, 70) der Sockel (48) aus erstrecken.

5. Verbinder nach dem vorhergehenden Anspruch, **dadurch gekennzeichnet, dass** jeder Sockel (48) vier paarweise (72 - 74, 76 - 78) entlang seiner zwei parallelen Längsränder (68 70) und in der Nähe der vorderen und hinteren Enden dieser Ränder angeordnete Halteklauen aufweist.

6. Verbinder nach einem beliebigen der Ansprüche 2 bis 5, **dadurch gekennzeichnet, dass** das Rahmengestell (90) Indexierungsmittel (116, 118) zur Indexierung seiner Längsposition in Bezug zu der den verschiedenen Sockeln (48) gemeinsamen unteren Platte (38, 46) aufweist.

7. Verbinder nach einem beliebigen der Ansprüche 2 bis 6, **dadurch gekennzeichnet, dass** das Rahmengestell (90) zwei parallele und gegenüberliegende seitliche Streben (96, 98) aufweist, die in der Nähe ihrer Längsenden durch zwei Querträger, einen vorderen und einen hinteren (100, 102), verbunden sind, und dass die vertikale Dicke des Rahmengestells größer als die Höhe der Sockel (48) und des Deckels (92) in geschlossener Position ist.

8. Verbinder nach dem vorhergehenden Anspruch in Kombination mit Anspruch 6,
**dadurch gekennzeichnet, dass** die Indexierungsmittel ein Paar von vertikalen Indexierungsstiften (116, 118) aufweisen, von denen jeder durch einen elastisch verformbaren Abschnitt (112, 114) einer der seitlichen Streben (96, 98) des Rahmengestells getragen ist, von dem aus er sich vertikal über die Ebene der Unterseite (106) des Rahmengestells hinaus erstreckt, um in einem komplementären Loch (46) der unteren Platte (38) aufgenommen zu werden.

9. Verbinder nach einem der Ansprüche 2 bis 5, **dadurch gekennzeichnet, dass** das Rahmengestell (90) Indexierungsmittel (250, 254) zur Indexierung seiner Längsposition in Bezug zu den Sockeln (48) aufweist.

10. Verbinder nach einem beliebigen der Ansprüche 2 bis 9, **dadurch gekennzeichnet, dass** das Verriegelungsorgan (94) zwischen dem Deckel (92) und dem Rahmengestell (90) wirksam ist.

11. Verbinder nach dem vorhergehenden Anspruch, **dadurch gekennzeichnet, dass** das Verriegelungsorgan (94) in Längsrichtung von vorn nach hinten am Deckel (92) zwischen einer verriegelten vorderen Position, in der die Verriegelungsmittel (228) des Verriegelungsorganes mit im Rahmengestell (90) gebildeten komplementären Mitteln (230) zusammenwirken, und einer entriegelten hinteren Position verschiebbar montiert ist.

12. Verbinder nach dem vorhergehenden Anspruch in Kombination mit Anspruch 7, **dadurch gekennzeichnet, dass** die Verriegelungsmittel eine Folge von Verriegelungsklauen (228) aufweisen, die sich in Längsrichtung von einem vorderen Querrand (190) des Verriegelungsorganes (94) aus erstrecken, und von denen jede unter einem Verriegelungsanschlag (230) aufgenommen ist, der sich in Längsrichtung nach hinten von dem vorderen Querträger (100) des Rahmengestells (90) aus erstreckt.

13. Elektrischer Verbinder nach einem beliebigen der vorhergehenden Ansprüche. **dadurch gekennzeichnet, dass** jede Aufnahme (162) der Karte (C) teilweise an der Oberseite des Deckels offen ist, und dass der Boden der Aufnahme, auf dem die Karte mit ihrer Unterseite aufliegt, wenigstens teilweise ausgeschnitten ist, um den den Anschlussbereichen (36) zugewandten Teil der Unterseite (34) der Karte (C) freizulassen.

14. Verbinder nach dem vorhergehenden Anspruch, **dadurch gekennzeichnet, dass** eine stabförmige Plattform (174) zur Anbringung der Karte (C) in der Nähe des vorderen Endes jeder Aufnahme (162) angeordnet ist und dass ihre Oberseite (172) eine Ebene (P) zur Anbringung der entsprechenden Karte (C) definiert.

15. Verbinder nach einem beliebigen der vorhergehenden Ansprüche, **dadurch gekennzeichnet, dass** das Verriegelungsorgan (94) eine Querplatte (184) ist, die über der Oberseite (142, 144) des Deckels gleitbeweglich montiert ist, und dass seine gegenüberliegenden Querenden (198, 200) vertikal entlang von äußeren Querseiten (202, 204) von seitlichen Streben (158, 160) des Deckels und dann in Form von zwei Klauen (206, 208) nach innen umgebogen sind, um zwei Korridore (210, 212) zum Führen der Verriegelungsplatte (184) am Deckel (92, 142) zu begrenzen.

16. Verbinder nach Anspruch 7, **dadurch gekennzeichnet, dass** Gelenkmittel des Deckels am Rahmengestell durch Gelenkachsstücke (140), die von dem hinteren Querträger (102) des Rahmengestells getragen sind, und durch genauso viele komplementäre zylindrische Aufnahmen (176, 178, 180) gebildet sind, von denen jede am hinteren Ende des Deckels gebildet ist.

17. Verbinder nach dem vorhergehenden Anspruch, **dadurch gekennzeichnet, dass** die zylindrischen Aufnahmen radial in einer im wesentlichen zur Oberseite (142) des Deckels (92) senkrechten Richtung offen sind, um die Montage der Achsstücke (140) in den Aufnahmen durch elastisches Einstecken in der radialen Richtung zu ermöglichen.

18. Verbinder nach Anspruch 2, **dadurch gekennzeichnet, dass** er elastische Mittel umfasst, die den Deckel in Bezug zum Rahmengestell ständig in Richtung seiner offenen Position beaufschlagen.

19. Verbinder nach einem beliebigen der vorhergehenden Ansprüche, **dadurch gekennzeichnet, dass** jeder Sockel einen elektrischen Schalter zur Erfassung der Anwesenheit einer Karte in Schreib-/Leseposition umfasst.

## Claims

1. Electrical connector (32) for the simultaneous electrical connection of at least two contact-type smart cards (C), the lower faces (25) of which have connection pads (36), **characterised in that** it comprises:
- at least two plate-shaped lower bases (48) which are independent and identical, are made of an insulating material and are transversely adjacent to one another, each of which forms a support for a series of electrical contact elements (52) whose free contacting ends (54) project beyond the plane of the upper face (56) of the corresponding base, in order to engage with the connection pads (36) on one of the cards (C), and each of which is fixed to a common lower board (38), especially a printed-circuit board, on which it bears by its lower face (64);
- a single card-carrying upper cover (92)
which has at least two coplanar independent housings (162) which are transversely adjacent to one another, each housing being able to accommodate, at least partially, a card (C) inserted longitudinally rearwards into its housing in a direction (I) parallel to its general plane and to that of the cover,
and which is mounted so as to pivot with respect to the bases (48), about a transverse hinge axis (X-X) located near-the rear longitudinal ends (88) of the bases (48) and of the cover (92), between a closed contact position in which the connection pads (36) on each card (C) in place in its housing (162) engage with the contact ends (54) of the corresponding base and an open position permitting to insert or extract one or several cards;
- and a member (94) for locking the cover (92) in the closed position.

2. Connector according to the preceding claim, **characterised in that** it comprises a rectangular frame-shaped chassis (90) which surrounds the adjacent bases (48) and is fixed to the lower board (38), the cover (92) being mounted so as to pivot on this frame-shaped chassis (90).

3. Connector according to the preceding claim, **characterised in that** the chassis-frame (90) is fixed to the lower board (38) and to the bases (48) by mounting means of the bayonet type.

4. Connector according to the preceding claim, **characterised in that** the chassis-frame (90) has fixing lugs (118, 120, 136, 138) which extend in the general plane of the chassis-frame, which are adjacent to the upper face (42) of the lower board (38) and which are able to be inserted, by sliding longitudinally forwards, beneath tabs (72, 76, 74, 78), for vertical retention of the chassis-frame (90), which extend transversely in a horizontal plane from the parallel, longitudinal and opposed edges (68, 70) of the bases (48).

5. Connector according to the preceding claim, **characterised in that** each base (48) has four retention tabs arranged in pairs (72-74, 76-78) along its two parallel longitudinal edges (68, 70) and near the front and rear longitudinal ends of these edges.

6. Connector according to any one of Claims 2 to 5, **characterised in that** the chassis-frame (90) has means (116, 118) of indexing its longitudinal position with respect to the lower board (38, 46) which is common to the various bases (48).

7. Connector according to any one of Claims 2 to 6, **characterised in that** the chassis-frame (90) has two lateral, parallel and opposed uprights (96, 98) which are joined, near their longitudinal ends, by two front and rear cross-members (100, 102) and **in that** the vertical thickness of the chassis-frame is greater than the height of the bases (48) and of the cover (92) in the closed position.

8. Connector according to the preceding claim, taken in combination with Claim 6, **characterised in that** the said indexing means comprise a pair of vertical indexing studs (116, 118), each of which is carried by an elastically deformable portion (112, 114) of one of the lateral uprights (96, 98) of the chassis-frame from which elastically deformable portion it extends vertically beyond the plane of the lower face (106) of the chassis-frame in order to be accommodated in a complementary hole (46) in the lower board (38).

9. Connector according to one of Claims 2 to 5, **characterised in that** the chassis-frame (90) has means (250, 254) of indexing its longitudinal position with respect to the bases (48).

10. Connector according to any one of Claims 2 to 9, **characterised in that** the locking member (94) comes into play between the cover (92) and the chassis-frame (90).

11. Connector according to the preceding claim, **characterised in that** the locking member (94) is mounted so as to slide longitudinally rearwards on the cover (92) between a locked front position, in which means (228) for locking the locking member engage with complementary means (230) formed in the chassis-frame (90), and an unlocked rear position.

12. Connector according to the preceding claim, taken in combination with Claim 7, **characterised in that** the said locking means comprise a series of locking tabs (228) which extend longitudinally from a front transverse edge (190) of the locking member (94), and each tab fits beneath a locking stop (230) which extends longitudinally rearwards from the front cross-member (100) of the chassis-frame (90).

13. Electrical connector according to any one of the preceding claims, **characterised in that** each housing (162) for the card (C) is partially open in the upper face of the cover and **in that** the bottom of the housing, against which the card bears by its lower face, is at least partially recessed so as to expose that part of the lower face (34) of the card (C) which is opposite the connection pads (36).

14. Connector according to the preceding claim, **characterised in that** a bar-shaped platform (174), on which the card (C) rests, is arranged near the front end of each housing (162) and its upper face (172) defines a plane (P) on which the corresponding card (C) rests.

15. Connector according to one of the preceding claims, **characterised in that** the locking member (94) is a transverse plate (184) which is mounted so as to slide above the upper face (142, 144) of the cover and **in that** its opposed transverse ends (198, 200) are folded vertically along the external transverse faces (202, 204) of lateral uprights (158, 160) of the cover and then transversely inwards in the form of two tabs (206, 208) so as to define two channels (210, 212) for guiding the locking plate (184) on the cover (92, 142).

16. Connector according to Claim 7, **characterised in that** means for hinging the cover to the chassis-frame consist of hinge pin portions (140) carried by the rear cross-member (102) of the chassis-frame and by the same number of complementary cylindrical housings (176, 178, 180), each of which is formed at the rear end of the cover.

17. Connector according to the preceding claim, **characterised in that** the cylindrical housings are open radially in a direction approximately perpendicular to the upper face (142) of the cover (92) in order to allow the pin portions (140) to be mounted in the housings by elastic snapping in the said radial direction.

18. Connector according to Claim 2, **characterised in that** it comprises elastic means which permanently urge the cover towards its open position with respect to the chassis-frame.

19. Connector according to any one of the preceding claims, **characterised in that** each base has an electrical switch for detecting the presence of a card in the read/write position.
